(19) Europäisches Patentamt
European Patent Office
Office européen des brevets

(11) **EP 4 231 589 B1**

(12) **EUROPEAN PATENT SPECIFICATION**

(45) Date of publication and mention
of the grant of the patent:
**13.11.2024 Bulletin 2024/46**

(21) Application number: **22382132.3**

(22) Date of filing: **17.02.2022**

(51) International Patent Classification (IPC):
*H04L 9/40* (2022.01)    *H04L 41/122* (2022.01)
*H04L 43/026* (2022.01)   *H04L 43/10* (2022.01)
*H04L 41/14* (2022.01)    *H04L 43/16* (2022.01)
*H04L 43/20* (2022.01)

(52) Cooperative Patent Classification (CPC):
**H04L 63/1491; H04L 41/122; H04L 43/026;
H04L 43/10; H04L 63/1458;** H04L 41/145;
H04L 43/16; H04L 43/20; H04L 2463/141;
H04L 2463/142

(54) **METHOD AND SYSTEM FOR NETWORK TOPOLOGY OBFUSCATION**

VERFAHREN UND SYSTEM ZUR NETZWERKTOPOLOGIEVERSCHLEIERUNG

PROCÉDÉ ET SYSTÈME D'OBSCURCISSEMENT DE TOPOLOGIE DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2023 Bulletin 2023/34**

(73) Proprietor: **Telefónica Innovación Digital, S.L.U.
28050 Madrid (ES)**

(72) Inventor: **MARIN, Eduard
28013 MADRID (ES)**

(74) Representative: **Herrero & Asociados, S.L.
Edificio Aqua - Agustín de Foxá, 4-10
28036 Madrid (ES)**

(56) References cited:
**US-A1- 2019 132 360**

- KIM JINWOO ET AL: "BottleNet: Hiding Network
Bottlenecks Using SDN-Based Topology
Deception", IEEE TRANSACTIONS ON
INFORMATION FORENSICS AND SECURITY,
IEEE, USA, vol. 16, 26 April 2021 (2021-04-26),
pages 3138 - 3153, XP011855931, ISSN:
1556-6013, [retrieved on 20210521], DOI:
10.1109/TIFS.2021.3075845
- VALDOVINOS ISMAEL AMEZCUA ET AL:
"Emerging DDoS attack detection and mitigation
strategies in software-defined networks:
Taxonomy, challenges and future directions",
JOURNAL OF NETWORK AND COMPUTER
APPLICATIONS, ACADEMIC PRESS, NEW YORK,
NY, US, vol. 187, 11 May 2021 (2021-05-11),
XP086602441, ISSN: 1084-8045, [retrieved on
20210511], DOI: 10.1016/J.JNCA.2021.103093
- WANG JUAN ET AL: "Detecting and Mitigating
Target Link-Flooding Attacks Using SDN", IEEE
TRANSACTIONS ON DEPENDABLE AND
SECURE COMPUTING, IEEE SERVICE CENTER,
NEW YORK, NY, US, vol. 16, no. 6, 1 November
2019 (2019-11-01), pages 944 - 956, XP011754399,
ISSN: 1545-5971, [retrieved on 20191108], DOI:
10.1109/TDSC.2018.2822275

**Description**

**Field of the invention**

The present invention relates generally to the field of network security and has its application in any network (e.g., those of telecom operators or Internet Service Providers, ISPs), more specifically, to techniques for concealing network topology from adversaries by providing a proactive defence for network topology obfuscation to increase cybersecurity.

More particularly, the present invention refers to a method and system of network topology obfuscation within an Autonomous System (AS) to alleviate any attack (e.g., Link Flooding Attacks: LFAs), which can be launched more efficiently and/or effectively if the adversary knows the network topology.

**Background of the invention**

Adversaries who have information about the network topology can typically perform certain attacks in a more efficient, effective and stealthy manner.

It is widely acknowledged that Distributed Denial of Service (DDoS) attacks constitute one of the Internet's major threats today. In recent years, DDoS attacks have been aggravated by the rise in the number of insecure Internet-of-Things (IoT) devices connected to the Internet. In the literature, there exist two main types of DDoS attacks: (i) those that target end-hosts and servers (i.e., volume-based attacks) and (ii) those that target the network infrastructure, also known as Link Flooding Attacks (LFAs). Volume-based attacks are simple yet effective attacks whose goal is to overload a server by sending a large volume of traffic to it. One prominent example of such an attack is the Mirai botnet, which affected many popular websites such as Twitter or Netflix. Fortunately, these attacks can now be prevented to a large extent using Content Delivery Network (CDN) infrastructures. Instead, LFAs aim to disrupt the network connectivity of as many users as possible by congesting network links. The goal of adversaries is to inject a large amount of (separate) flows such that they all simultaneously traverse a set of core network links to overload them. For this purpose, adversaries can use low-volume, separate flows that are indistinguishable from normal traffic, making it difficult for network operators to develop defences to protect against LFAs. Note that adversaries do not require knowledge of any information about the capacity or the load of links and routers to conduct LFAs.

According to Meier et al. in the article "NetHide: Secure and Practical Network Topology Obfuscation" (Proceedings of the USENIX Security Symposium, 2018), executing a LFA against an arbitrary link without knowing the network topology requires five times more flows than when the adversary knows the network topology. Similarly, the number of flows needed to perform a LFA against a target link is orders of magnitude higher when the topology is not known. Indeed, having some knowledge of the network topology is an important prerequisite to execute effective, efficient and stealthy LFAs. This is important for adversaries, as their goal is always to conduct attacks that cause significant damage while minimizing the cost of their attacks (i.e., the number of flows they have to create) and the chances of being detected as much as possible.

At first glance, one might argue that keeping the network topology confidential could be an effective mechanism for network operators to increase the cost to perform successful LFAs. This defence would align well with today's Internet Service Providers (ISPs) since they usually regard their network topologies as confidential. However, researchers have shown that existing path-tracing tools, such as traceroute, can be used to reveal previously unknown ISPs' network topologies including their forwarding behaviour and tracing flow distributions, i.e., the number of traceroute flows received by each router's interface. Hence, these techniques are bound to be applied by adversaries to carry out more efficient and effective LFAs.

Over the last few years, researchers have proposed several reactive and proactive countermeasures against LFAs. Reactive defence methods can only detect such attacks, while proactive countermeasures (i.e., network topology obfuscation solutions) mitigate such attacks by exposing a virtual (false) network topology that conceals potential bottleneck links and nodes while in some cases also attempting to maintain the utility of the information provided by path tracing tools. Note that proactive countermeasures do not prevent LFAs, but rather significantly increase the cost to realize them, thus also reducing the incentives to execute such attacks.

The goal of existing proactive network obfuscation solutions is to conceal potential bottleneck links from adversaries by exposing secure virtual network topologies while (in some cases also) maintaining the utility of the path tracing information. Below, the three state-of-the-art proactive network obfuscation solutions are briefly described:

- NetHide is a representative research work, by Meier et al. (aforementioned "NetHide: Secure and Practical Network Topology Obfuscation", Proceedings of the USENIX Security Symposium, 2018), which generates secure virtual topologies that conceal potential bottleneck links from adversaries while retaining most of the utility of the path tracing information. To achieve this, NetHide first selects a (small) set of secure virtual topologies and among them chooses the most useful one. For the authors of NetHide, a virtual topology is secure if it guarantees that the number of active flows that traverse potential bottleneck links are below their capacity (so that those links are not congested). The usefulness of a virtual topology is a measure that reflects its accuracy and utility. The accuracy reflects how similar the network paths are in the real and virtual topologies, respectively, while the utility is an indicator of how physical events (e.g., link failures and congestion) are observed in the virtual topology (and vice versa). Note that NetHide is the only solution that considers utility when selecting its virtual topologies; the other following approaches focus solely on the security aspect.

- Trassare et al. proposed in "A technique for Network Topology Deception" (Proceedings of IEEE Military Communications Conference, 2013) a topology obfuscation solution to identify and protect the node whose failure can cause the greatest impact within the network. To find such a node, the authors rely on the usage of the betweenness centrality metric. Subsequently, their solution generates all possible virtual topologies - each of them with only a single virtual link between each pair of nodes - and among the resulting virtual topologies, it chooses the one that most minimizes the betweenness centrality of the most important node.

- LinkBait by Wang et al., ("LinkBait: Active Link Obfuscation to Thwart Link-Flooding Attacks," arXiv Preprint, 2017) protects potential bottleneck links by rerouting some tracing flows either to nearby links (i.e., branch links) or non-bottleneck links (i.e., bait links). The authors claim that bait links can be branch links too. By rerouting tracing flows, LinkBait can reduce the number of times bottleneck links appear in tracing responses, tricking the adversary into thinking that the bottleneck link is somewhere else in the network.

After a thorough, systematic analysis of the three state-of-the-art network obfuscation defences, four fundamental weaknesses can be identified in all of them:

1) Adversaries can infer the popularity of nodes and links. Previous solutions focused solely on identifying and concealing individual links that could become a bottleneck from adversaries. However, they did not look at this problem from the perspective of an adversary who collects a large amount of tracing responses and makes inferences about the popularity of logical nodes (i.e., router interfaces) and links. This led to the design of solutions that can hide certain bottleneck links from adversaries but are unable to conceal the number of appearances of logical nodes in tracing responses. The latter is problematic because, even if virtual topologies are deployed, adversaries can still execute efficient LFAs by targeting those nodes that appear more frequently in their tracing responses.

2) Virtual topologies are too similar to real topologies. Existing solutions aim to generate secure virtual topologies on top of real nodes. In particular, to conceal a bottleneck link, these solutions can either (i) create virtual links, (ii) skip real links and nodes or (iii) use a combination of the previous methods. However, none of them considered the addition of virtual nodes in order to increase the complexity of the virtual network topology observed by the adversary. Without adding virtual nodes, regardless of the network size, the number of potential virtual topologies that can be generated is often very limited. This results in virtual topologies that are too similar to the real topologies and thus easier to reverse. Because of this, the topology leakage in the virtual topology is also likely to be very similar to the one in the real topology.
Additionally, adversaries can leverage the fact that the process of generating virtual topologies in existing solutions is (to a large extent) deterministic, to infer information about the real topology. For example, the problem of NetHide is that it can only choose a virtual topology at random from the (limited) set of network topologies that are both secure and most useful. Depending on the number of virtual topologies that fulfil both conditions, the randomness in the process of choosing a virtual topology can be significantly reduced. This also applies to Trassare et al's solution which always exposes the virtual topology (with a single virtual link) that most minimizes the betweenness centrality of the bottleneck node. Equally, the procedure by which LinkBait finds bait links can be inferred by the adversary since LinkBait does not provide many options to choose bait links. In all these cases, adversaries can leverage the deterministic nature of the virtual topology generation to make guesses about the real topology (including where the bottleneck link can be).

3) Virtual topologies are not secure long-term. Previous solutions focus solely on generating a single instance of a secure virtual topology. Moreover, none of the existing solutions considers the topology leakage exposed to adversaries who can observe slightly modified virtual topologies deployed at different times. This is important because the presence or absence of a given node in two consecutive virtual topologies can disclose key insights about potential bottlenecks within the network which can ultimately facilitate LFAs.

4) Network operators cannot leverage path tracing information to debug their networks. It is important for virtual topologies not only to be secure but also to maintain the utility of the information provided by path tracing tools. The fundamental problem with previous solutions is that they all rely on avoiding certain real nodes (i.e., the bottleneck nodes) from answering the tracing requests that traverse them (in order to protect them from adversaries). Existing solutions skip real nodes and reroute tracing requests to other nodes which handle and respond to the tracing requests intended for bottleneck nodes. To preserve the utility of the path tracing information, NetHide exposes secure virtual topologies while trying to skip as few real nodes as possible (being 1 their best case). However, in practice NetHide will often find a secure virtual topology only if multiple real nodes are skipped (as 1-hop neighbouring nodes of the bottleneck node are likely to be as popular as the latter). In such a case, the use of NetHide can result in a significant utility loss in the path tracing information. Unlike NetHide, neither Trassare et al.'s solution nor LinkBait consider utility when generating their virtual topologies, rendering both solutions impractical. In the former all tracing packets are handled by a single node (the ingress router), whereas in the latter tracing packets are rerouted to a completely different path (the branch and bait links). Hence, these solutions not only prevent network operators from discovering failures in the bottleneck node and in any of its neighbour nodes and links, but also can provide misleading information to them.

Note that fixing these weaknesses, which can significantly lower the security and utility of the generated virtual topologies, would require major changes in existing defences or even fully redesigning them. Besides the aforementioned limitations, another problem of existing solutions is that none of them tested their obfuscation algorithms using real router-level network topologies for which the IP addresses are known.

Therefore, there is a need in the state of the art for providing networks with methods and techniques to conceal the network topology from adversaries and offer increased resistance against cyber-security attacks, while still allowing network operators to use standard debugging tools to find failures within the network.

Kim Jinwoo et Al: "BottleNet: Hiding Network Bottlenecks Using SDN-Based Topology Deception", in IEEE TRANSACTIONS ON INFORMATION FORENSICS AND SECURITY, vol. 16, 26 April 2021 (2021-04-26), pages 3138-3153, is also relevant prior art to the present invention.

## Summary of the invention

The present invention solves the aforementioned problems and overcomes previously explained state-of-art work limitations by providing a secure and practical proactive defence for long-term network topology obfuscation that alleviates any attack where adversaries can benefit from knowing the network topology (e.g., Link Flooding Attacks (LFAs)).

The main objective is to prevent adversaries who use path tracing tools from gaining any advantage over blind (inefficient) LFAs executed without such tools. This purpose is achieved by equalizing tracing flow distributions over nodes and links so that adversaries are unable to distinguish which of them are the most important ones, thus significantly increasing the cost of performing LFAs. LFAs benefit from the fact that some nodes and links in the network appear more than others in the tracing responses obtained by adversaries. As the proposed network topology obfuscation aims to equalize the path tracing flow distribution over network nodes and links, the adversaries are convinced that all nodes and links are equally "popular" (i.e., important) in the network. Meanwhile, the present invention preserves subnet information and maintains the utility of the information collected by path tracing tools, helping network operators who use path tracing tools to debug their networks.

In the context of the present invention, two types of network topology are distinguished: (i) the physical topology and (ii) the logical topology. The former consists of the routers and the (physical) links between them, whose configuration is only known to network operators. Instead, the latter comprises a set of logical nodes (i.e., the routers' ingress interfaces) and the interconnections between them, i.e., the logical links. This is the network topology view adversaries can obtain through path tracing tools.

The present invention aims to expose virtual topologies with equalised path tracing flow distribution over all network nodes and links. This way, adversaries who use path tracing tools (to retrieve network topology information) are unable to distinguish between popular and non-popular nodes by looking at the number of times each node appears in their tracing responses. One of the main challenges is how to achieve the latter while maintaining the utility of the information provided by path tracing tools. Thus, the goal is to generate virtual topologies that jointly maximize security and utility. A virtual topology comprises real nodes and virtual nodes, and the latter are the ones created by the present invention.

The present invention works well even in an adversarial environment where adversaries try to carry out attacks with the purpose of decreasing the security and utility of the virtual topologies generated by the method/system proposed here.

An aspect of the present invention refers to a method of network topology obfuscation as defined in claim 1.

Another aspect of the present invention refers to a system comprising the following components communicated with each other and implementing the method of network topology obfuscation described above: (i) a topology analyser, (ii) a topology obfuscator and (iii) a topology deployer.

The method and system in accordance with the above-described aspects of the invention overcomes the limitations of previous solutions and has a number of advantages with respect to the aforementioned prior art, which can be summarized as follows:

- Unlike previous solutions, the present invention tackles a much more fundamental and challenging problem, that is, preventing imbalanced tracing flow distributions in the adversary's view of the network topology. The present invention analyses the view of the network topology from the adversary perspective in order to determine and conceal the popularity of logical links and nodes so that adversaries are unable to distinguish which of them are the most popular ones.
- The present invention not only creates virtual links and skips real ones (like previous approaches), but also extends the network topology by creating virtual nodes (indistinguishable from real nodes) that are connected to each other, forming fully disjoint paths from those that connect real logical nodes. The addition of virtual nodes is fundamental to increase the number of virtual topologies that can be exposed (which increases the difficulty of attacks). Additionally, the present solution relies on a non-deterministic algorithm for adding virtual nodes which selects IP addresses at random (within the subnet of the real node's IP address).
- The present invention continuously monitors how much topology information is leaked, and dynamically re-obfuscates the network whenever the topology leakage exceeds the obfuscation threshold specified by network operators. Besides creating virtual nodes for reducing the popularity of nodes and links, the proposed method of network topology obfuscation also generates virtual nodes to prevent adversaries from discovering the real nodes within the network. Such virtual nodes always remain with their corresponding real node; this way, adversaries are unable to discover which nodes are the real ones even after observing slightly different virtual topologies exposed at different times. This contrasts with virtual nodes created only for reducing the popularity of nodes and links, which may be added to a virtual topology but do not necessarily need to be present in subsequent virtual topologies.
- Unlike previous solutions, the present invention does not skip real nodes to conceal them from adversaries. This is crucial to be able to detect failures in any node in the network. By creating virtual nodes such that their IP addresses are in the same subnet as their corresponding real nodes, it is ensured that tracing responses preserve the utility of path tracing information (while preventing adversaries from inferring any information that could allow them to distinguish between real and virtual nodes). This allows the network to hide the popularity of nodes and links from adversaries, while giving enough information to in-network operators to debug their network.
- The obfuscation algorithms used by the present invention to equalize the tracing flow distributions are very effective at hiding the popularity of nodes and links in the network through a reasonably small number of virtual nodes. This is the case even when a small fraction of routers within the network support Software-Defined Networking (SDN).
- The present invention does not introduce a noticeable delay, thus maintaining the utility of the RTT values included in tracing responses.
- The present invention provides strong security while retaining most of the utility of path tracing information to ensure that network operators can still use path tracing tools to debug their networks.
- The present invention can protect against a large and diverse set of attacks aimed to infer the real network topology from the exposed virtual topology including RTT-based fingerprinting attacks, alias-resolution-based attacks, topology inference attacks, cross virtual topology attacks, subnet inference attacks or Denial-of-Service attacks.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows an overview of the network topology obfuscation system according to a preferred embodiment of the invention and a block diagram of the system architecture showing the three main blocks: topology analyzer, topology obfuscator and topology deployer.

Figure 2 shows a logical topology as viewed by an adversary and obtained by the topology analyzer of the network topology obfuscation system, according to a possible embodiment of the invention.

Figure 3 shows a tracing flow distribution measured by the topology analyzer in an example of running the network topology obfuscation method, according to a possible embodiment of the invention.

Figure 4 shows a diagram of the offline obfuscation method to equalize the tracing flow distributions used by the topology obfuscator, according to a possible embodiment of the invention.

Figure 5 shows an example of SDN scenario in which the topology deployer deploys a virtual topology, according to a possible embodiment of the invention.

Figure 6 shows the inverse complementary cumulative distribution functions for different obfuscation threshold of flow densities measured respectively in small-sized network, a medium-sized network and a large-sized network, according to a first embodiment of the invention.

Figure 7 shows the inverse complementary cumulative distribution functions for different obfuscation threshold of flow densities measured respectively in small-sized network, a medium-sized network and a large-sized network, according to a second embodiment of the invention.

Figure 8 shows the number of virtual nodes created to reach different levels of obfuscation, according to the first and second embodiments of the invention.

Figure 9 shows the trade-off between topology leakage and the required number of virtual nodes to be created by the topology obfuscator.

Figure 10 shows the effectiveness of obfuscation measured in percentage of leakage reduction under a partial SDN deployment.

Figure 11 shows a comparison of the first and second embodiments of the invention and existing obfuscation approaches in terms of the IP-level similarity.

Figure 12 shows a comparison of the measured subnet-level utility for different subnet sizes.

Figure 13 shows the time for generating the logical topology by the topology analyser.

Figure 14 shows the time for the offline topology obfuscation by the topology obfuscator.

## Preferred embodiment of the invention

The embodiments of the invention can be implemented in a variety of architectural platforms, operating and server systems, devices, systems, or applications, and can be applied to any network. Any particular architectural layout or implementation presented herein is provided for purposes of illustration and comprehension only and is not intended to limit aspects of the invention.

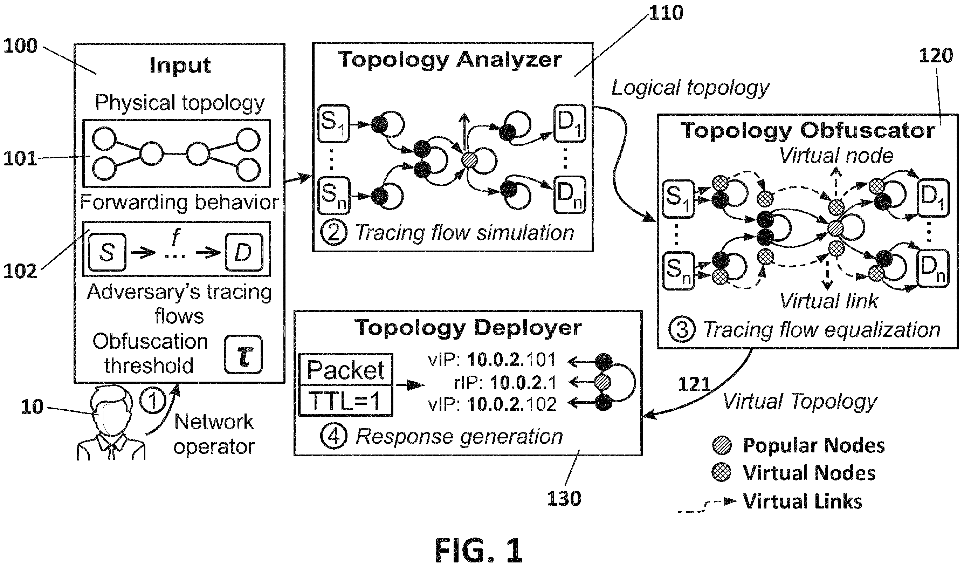

A preferred embodiment of the invention relates to a system implementing a method for long-term obfuscation of a network topology, as shown in Figure 1. The system comprises three main components: i) the topology analyser **110,** ii) the topology obfuscator **120** and iii) the topology deployer **130.**

The network operator **10** provides **1** as input **100** for the proposed method/system for long-term obfuscation, in the example of Figure 1: the physical topology **101** and its forwarding behavior, and the adversary's tracing flows **102** and also, in this example, the obfuscation threshold $\tau$**.** The topology analyzer **110** computes the logical topology which is delivered **111** to the topology obfuscator **120** and obtains the tracing flow distribution from the adversary's perspective, through a tracing flow simulation **2,** to identify popular nodes **P.** The topology obfuscator **120** generates virtual nodes and links forming a virtual topology which equalizes **3** the tracing flow distribution and is delivered **121** to the topology deployer **130.** And last but not least, the topology deployer **130** continuously monitors tracing flows and generates tracing responses **4** with real or virtual IP addresses.

Table 1 summarizes the notation used throughout this description of the embodiments of the invention.

**Table 1**

| Notation | Meaning |
| --- | --- |
| $\mathcal{G}^p$ | Physical topology |
| $\mathcal{N}^p$ | Physical node (router) |
| $\mathcal{L}^p$ | Physical link |
| $\mathcal{G}$ | Logical topology |
| $\mathcal{N}$ | Logical node (IP address) |
| $\mathcal{L}$ | Logical link |
| $\mathcal{G}'$ | Virtual (logical) topology |
| $\mathcal{N}'$ | Virtual (logical) node |
| $\mathcal{L}'$ | Virtual (logical) link |
| $fd^N$ | Node flow density |
| $fd^L$ | Link flow density |

(continued)

| Notation | Meaning |
|---|---|
| $P_{s \to d}$ | A forwarding path between $s$ and $d$ $\quad P_{s \to d}^{p}$ |
| | A forwarding path between $s$ and $d$ for a prefix $p$ |
| $T^p$ | A set of all forwarding trees for a prefix $p$ |
| $leak(\mathcal{G})$ $\mathcal{G}$ $\mathcal{G}\mathcal{G}$ | Topology leakage of |
| $sim(\mathcal{G}', \mathcal{G})$ $\mathcal{G}'$ $\mathcal{G}$ | Topology similarity of $\mathcal{G}'$ given $\mathcal{G}'$ |
| $util( , )$ | Topology utility of given |

$G^p = (N^p, L^p)$ denotes a physical topology, where $N^p$ and $L^p$ refer to its routers and links, respectively. Note that an Autonomous System (AS) typically determines its forwarding behaviour through Interior Gateway Protocols (IGPs) (e.g., OSPF: Open Shortest Path First) used to compute low-weight routing paths.

$G = (N, L, fd^N, fd^L)$ denotes a logical topology, where $N$ and $L$ refer to the logical nodes and logical links, respectively, and $fd^N$ and $fd^L$ correspond to the flow density of a node and a link (i.e., the total number of unique flows that pass through it).

Similarly, $G'$ denotes a virtual (logical) topology, with $N'$ virtual (logical) nodes and $L'$ virtual (logical) links.

A flow is denoted by $f = (s, d, a)$, where $s \in S$ is a set of sources, $d \in D$ is a set of destinations, and $a$ is the amount of tracing flows (e.g., 240K) sent from a source $s$ to a destination $d$. Here, $s$ and $d$ represent nodes such as individual hosts or IP prefix blocks that send or receive tracing flows.

Given an unprotected (i.e., with imbalanced tracing flow distributions) network topology, the goal of the proposed method for network topology obfuscation is to generate a virtual topology that significantly reduces the topology leakage in the network. As a first step, the view of the network topology from the adversary's perspective is analysed and the topology leakage is computed. Subsequently, virtual nodes are created (by instructing real nodes to reply to tracing packets with IP addresses different to theirs) for two different purposes: (i) to conceal real nodes from adversaries long-term and (ii) to decrease the popularity of the most observed nodes and links. The latter is crucial to decrease the topology leakage. The network operators can specify to the proposed method their desired level of obfuscation depending on the level of security that they need and the overhead that they are willing to tolerate. Meanwhile, the proposed method assigns virtual nodes IP addresses within the same subnet as the one from the real node from which they originate, maintaining the utility of path tracing information. Whenever a node appears too frequently in the adversary's tracing responses compared to the other nodes, the proposed method automatically adjusts the exposed virtual topology to decrease the topology leakage based on the level of security that the network operators wish to have.

The metrics used to measure the level of security and utility of the generated virtual topologies are described below.

- Topology leakage (security metric):
  The topology leakage is defined as the difference in flow density between the node that receives the most tracing flows (i.e., the most popular node) and the one that receives the least tracing flows (i.e., the least popular node). Hence, the leakage of a given logical topology G is formally defined as:

$$leak(\mathcal{G}) = |\max(fd^N) - \min(fd^N)|$$

Ideally, to prevent adversaries from gaining any insights about the popularity of nodes and links, tracing flows should be uniformly distributed over all nodes and links. This way, all nodes would appear in tracing responses with equal probability, and hence the topology leakage would be non-existent. In such a case, adversaries who use path tracing tools would not gain any advantage over blind (inefficient) LFAs executed without such tools.

- Topology similarity (security metric):
  The topology similarity refers to how similar a given logical topology G and its corresponding virtual logical topology G' are at the graph level. The lower the topology similarity, the more random and complex the virtual topology is, which results in greater security. To measure the topology similarity, the graph edit distance between G and G' is computed. This metric reports on the minimum number of operations required to transform G' into G. Formally, the topology similarity between G and G'is defined by:

$$sim(\mathcal{G}', \mathcal{G}) = 1 - \frac{GED(\mathcal{G}', \mathcal{G})}{|\mathcal{G}'| + |\mathcal{G}|},$$

where *GED(G', G)* denotes the graph edit distance between G and G'. *|G|* and *|G'|* correspond to the sum of the number of nodes and links in the real logical topology and the virtual logical topology, respectively.

- Topology visibility (utility metric):
  This metric reflects how well virtual topologies can assist network operators in finding network failures. The better the subnet-level visibility, the more chances of network operators being able to quickly fix such failures. $P_{s\rightarrow d}$ denotes a tracing path (i.e., a sequence of IP addresses corresponding to the nodes traversed) from source s to destination d. $PP_{s\rightarrow d}$ refers to the same tracing path but this one only contains the subnet-level information, while $T^p$ corresponds to the subnet-level network's forwarding tree for a given prefix p. Consider a scenario where (external) network operators observe a failure at the i-th hop (e.g., in the 3rd node) in a tracing path $P_{s\rightarrow d}$. The probability of network operators (within the AS) being able to accurately locate the network failure (based on the tracing information they receive from external network operators) depends on the number of forwarding paths *numFP* with length *i-1* which has identical subnet-level information as $P_{s\rightarrow d}$:

$$numFP(T^p, P^p_{s\rightarrow d}, i) = |T^p[0:i-1] \cap P^p_{s\rightarrow d}[0:i-1]|,$$

where [0: *i* - 1] denotes the sequence of IP addresses before the failure hop i. Therefore, the utility of a virtual topology G'given a logical topology G is defined as

$$util(\mathcal{G}', \mathcal{G}) = avg\left(\sum_{(s,d)\in T^p, s\neq d} \sum_{i=2}^{|P^p_{s\rightarrow d}|} \frac{1}{numFP(T^p, P^p_{s\rightarrow d}, i)}\right)$$

Two variants or embodiments are proposed: The first one estimates the adversary's view of the network topology offline based on information provided by the network operators. Then, it uses this information along with the obfuscation threshold (also specified by the network operators) to compute (offline) the number of virtual nodes required to guarantee that the topology leakage is below the obfuscation threshold. Afterwards, the network topology obfuscation method exposes a virtual topology that attempts to reduce the topology leakage in a best-effort manner using solely the number of nodes created offline. This first variant is suitable for network operators who do not want to create too many virtual nodes. Yet, it requires network operators to possess information about the adversary's behaviour (which may be unavailable or inaccurate). In contrast, the second variant operates fully online and performs the obfuscation tasks on-the-fly (i.e., as tracing packets arrive to the network) without requiring the definition of the adversary's behaviour. The second variant computes firstly the topology leakage and then attempts to decrease it. Here, rather than providing the desired topology leakage reduction, network operators are required to provide the maximum difference in number of tracing flows they can tolerate between any pair of nodes. In this case, the goal of the proposed method is to guarantee that the topology leakage does not exceed the tolerated number.

Below, the main components of the proposed system (topology analyser **110,** topology obfuscator **120** and topology deployer **130)** implementing the network topology obfuscation method are introduced for each of the two aforementioned variants, focusing on how these three components work when applied to the first variant and the second variant. Next, the details of the first variant/implementation are described first, followed by an explanation of how the second variant differs from the first one.

I) Topology Analyzer **110**

The topology analyser **110** starts by inspecting a given (unprotected) network topology in order to infer the network topology view observed by an adversary who uses path tracing tools. Then, the topology analyser **110** analyses the tracing flow distribution to find the most popular nodes and links.

In order to build the adversary's logical topology, the topology analyser **110** initially conducts a series of simulations offline to find the network topology the adversary would observe from the tracing responses it obtains. To that end, in the first variant, two possible ways for obtaining the adversary's behaviour are distinguished: (i) network operators provide the network topology and its forwarding behaviour themselves (e.g., based on past attacks), or (ii) network operators rely on some default settings (e.g., assuming that the adversary can send packets from anywhere in the network).

On the contrary, in the second implementation/variant, no assumptions on the adversary's tracing behaviour are made by the system: it simply obfuscates the network topology "on-the-fly" (i.e., as packets are sent to the network).

Going back to the first implementation/variant, the topology analyser **110** requires network operators **10** to provide the network (physical) topology and its forwarding behaviour, and (according to the first implementation variant of the invention) the adversary's tracing flows. For the latter, one option is to let network operators **10** specify the adversary's behaviour themselves (e.g., based on traces from past attacks).

Alternatively, the topology analyser **110** can use some default configuration, e.g., assume a worst-case scenario where adversary's flows are sent from all ingress routers. In the example below, it is assumed that network operators **10** have valuable information about past attacks which they can use to model the adversary's tracing behaviour.

The topology analyser **110** proceeds with its (offline) simulations as follows: i) receiving the input adversary's tracing flows, ii) sending them to the corresponding destination nodes and iii) collecting the produced tracing responses. The adversary's tracing flows are given as a triplet containing the source and destination IP prefix blocks (or wildcard rules) along with their corresponding flow amounts. For example, a triplet (10.1.0.0/16, 10.2.0.0/16, 240K) mimics the behaviour of an adversary who uses source nodes in 10.1.0.0/16 to send 240K different tracing flows to destination nodes in 10.2.0.0/16.

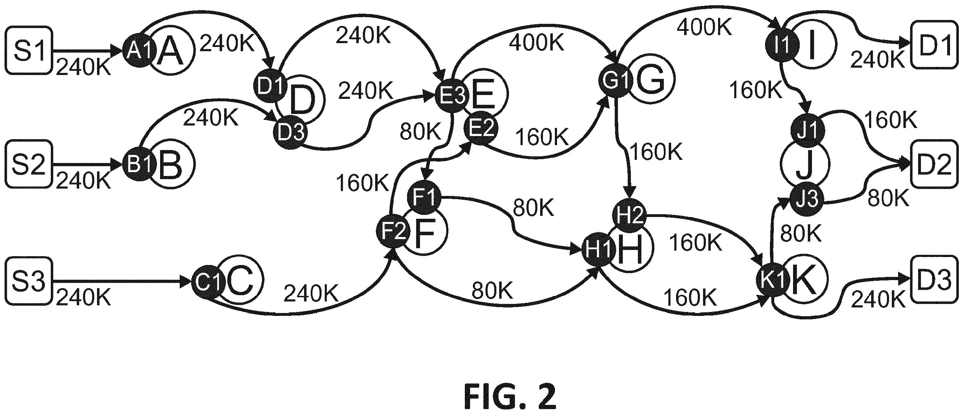

Figure 2 shows an example of the network topology view observed by an adversary who sends 240K tracing flows between all source-destination pairs in the network. Rectangles denote source **S1, S2, S3** and destination nodes **D1, D2, D3**. The white and black circles refer respectively to physical nodes **A-K** (not seen by path tracing tools) and logical nodes **A1,...E1, E2,...J1, J3,K1** visited by flows. The displayed numbers on the links denote the sum of the expected flow count (i.e., their flow density) per logical link. The topology analyser **110** can identify the popular nodes and links based on the path tracing flows that nodes receive.

Next, the graph-based algorithm used to construct the network's logical topology from a given physical topology and adversary's tracing behaviour is introduced and called **Algorithm 1.** Given a physical topology, its forwarding behaviour and the adversary's tracing flows as input 100, the algorithm picks the first adversary's tracing flow, which specifies how many tracing flows a are sent from the source host s to the destination host d (line 2 of the algorithm). Then, the algorithm (line 3) computes the physical path $path_{s \to d}$ , which contains all physical nodes along the shortest path from the source s to destination d. Starting from the source, a tracing flow visits each i-th physical node $n^p_i$ along the physical path $path_{s \to d}$ (lines 4 to 5). For each visited physical node, the algorithm obtains a tracing response with the IP address of the router's ingress interface (lines 6 to 7). Then, a logical link $l_i$ from the previous node (the last visited one) $n_{i-1}$ to the current node $n_i$ is created (line 8). If the logical node and link do not (yet) exist in the logical topology, they are added to it (lines 9 to 12). The algorithm also adds the number of tracing flows a to the flow density of the corresponding link and node, respectively (denoted as $fd^L(l_i)$ and $fd^N(n_i)$) (lines 13 to 14). This process is repeated for all physical nodes along this specific path then for all other adversary's tracing flows. Finally, the algorithm returns the logical topology G which reflects the adversary's view of the network (line 15).

---

**Algorithm 1** Logical topology generation

---

**Require:**
  Physical topology $\mathcal{G}^p = (\mathcal{N}^p, \mathcal{L}^p)$
  Adversary's tracing flow set $F = \{f_1, f_2, ..., f_x\}$
  $f = (s, d, a), s \in S, d \in D, a \in \mathbb{N}$
**Ensure:**
  Logical topology $\mathcal{G} = (\mathcal{N}, \mathcal{L}, fd^N, fd^L)$
  1: $\mathcal{N} \leftarrow \emptyset, \mathcal{L} \leftarrow \emptyset$                                     ▷ Initialization
  2: **for** $f \in F$, where $f = (s, d, a)$ **do**
  3:     $path_{s \rightarrow d} \leftarrow$ GETFORWARDINGPATH$(\mathcal{G}^p, s, d)$
  4:     $n_0 \leftarrow s$                                ▷ Initialize the current logical node
  5:     **for** $i \leftarrow 1$ to $path_{s \rightarrow d}$.length **do**
  6:         $n_i^p \leftarrow path_{s \rightarrow d}[i]$
  7:         $n_i \leftarrow$ GETINTFIPADDR$(\mathcal{G}^p, n_{i-1}^p, n_i^p)$
  8:         $l_i \leftarrow (n_{i-1}, n_i)$                    ▷ Make a logical node and link
  9:         **if** $n_i \notin \mathcal{N}$ **then**                    ▷ If $n_i$ does not exist, add it
  10:             $\mathcal{N} \leftarrow \mathcal{N} \cup \{n_i\}$
  11:         **if** $l_i \notin L$ **then**                    ▷ If $l_i$ does not exist, add it
  12:             $\mathcal{L} \leftarrow \mathcal{L} \cup \{l_i\}$
  13:         $fd^N(n_i) \leftarrow fd^N(n_i) + a$   ▷ Update node flow density
  14:         $fd^L(l_i) \leftarrow fd^L(l_i) + a$     ▷ Update link flow density
  15: $\mathcal{G} \leftarrow (\mathcal{N}, \mathcal{L}, fd^N, fd^L)$

---

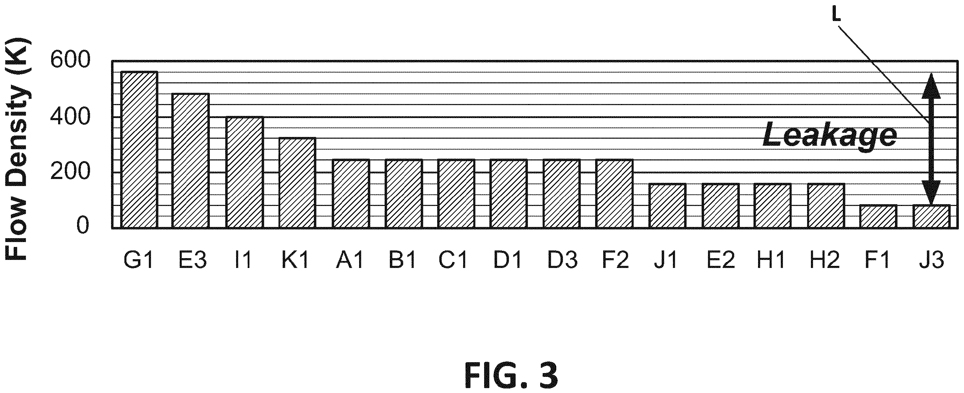

Figure 3 shows the measured tracing flow distribution in our running example. The value inside each bar denotes the z-core of each router's interface, while the arrow of double point refers to the current topology leakage **L** in the network.

Besides revealing the logical topology, tracing responses can provide the adversary with insights about the tracing flow distribution in the network. Unfortunately, regardless of their size, networks typically contain a few nodes that handle most of the traffic, provoking an imbalanced path tracing distribution over nodes and links. Considering the network topology shown in Figure 2 and its corresponding tracing flow distribution depicted in Figure 3, due to the imbalanced tracing flow distribution, there exists a significant difference in flow density between the most popular logical node (i.e., G1) and the least popular ones (i.e., F1 and J3). As a result, the current network topology has a high topology leakage, meaning that valuable information about the network characteristics is disclosed to adversaries.

The proposed system/method allows network operators 10 to set up an obfuscation threshold $\tau$ to limit the maximum topology leakage permitted in the network. This provides greater flexibility since it allows adjusting the topology according to the needs of network operators. Here, the obfuscation threshold $\tau$ refers to the topology leakage reduction (measured in %) which network operators **10** wish to achieve with respect to the topology leakage in the original network topology. The higher the topology leakage reduction is, the more equalised the tracing flow distribution will be, and thus the more difficult it will be for adversaries to gain insights about the popularity of nodes and links. However, this typically also comes at the cost of generating more virtual nodes, which is undesirable. Therefore, there is the need to find a suitable balance between the obfuscation threshold chosen by the network operator **10** and the number of virtual nodes generated by the proposed system, as is explained further below.

II) Topology Obfuscator **120**

The topology obfuscator **120** equalizes the path tracing distributions over nodes and links in a best-effort manner while keeping the number of created virtual nodes relatively small. Therefore, the aim of the topology obfuscator **120** is estimating the number of virtual nodes to obfuscate the network topology.

Suppose the topology leakage in the original network topology is 600 flows, as depicted in Figure 2, and that network operators wish an 80% topology leakage reduction. In such a case, the goal of the proposed obfuscation method is to lower the topology leakage from 600 flows to (at most) 120 flows.

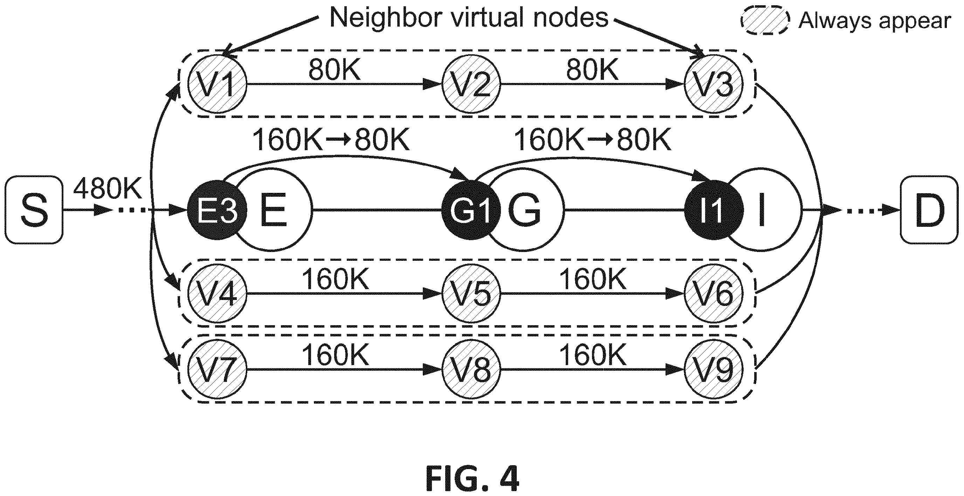

Figure 4 illustrates the procedure through which the offline algorithm used by the topology obfuscator **120** equalizes the tracing flow density of a popular node (e.g., G1) by adding virtual nodes: **V1, V2, and V3,** as shown in Figure 4.

In a possible implementation, the following offline obfuscation algorithm, called here **Algorithm 2** and defined in detail below, is used by the topology obfuscator **120** to estimate the number of virtual nodes needed and decide where they need to be created:

---

**Algorithm 2** Offline virtual node estimation

**Require:**
    Logical topology $\mathcal{G} = (\mathcal{N}, \mathcal{L}, fd^N, fd^L)$,
    Leakage reduction (%) $\tau_l \in [0, 100]$,
    Number of fixed virtual nodes per real node $virtual^{fixed}$

**Ensure:** Virtual topology $\mathcal{G}'$

1:   $leak^{current} \leftarrow |\max(fd^N) - \min(fd^N)|$
2:   $leak^{allowed} \leftarrow (100 - \tau_l) \cdot leak^{current}$
3:   $\mathcal{N}'_{fixed} \leftarrow \text{CREATEVIRTUALNODESINALLNODES}(virtual^{fixed})$
4:   $\mathcal{L}'_{fixed} \leftarrow \text{CREATEVIRTUALLINKS}(\mathcal{G}, \mathcal{N}'_{fixed})$
5:   $\mathcal{N} \leftarrow \mathcal{N} \cup \mathcal{N}'_{fixed}, \mathcal{L} \leftarrow \mathcal{L} \cup \mathcal{L}'_{fixed}$
6:   **while** $leak^{current} > leak^{allowed}$ **do**
7:       $n_{curr} \leftarrow \arg\max_{n \in \mathcal{N}}(fd^N(n))$
8:       $N'_{curr} \leftarrow \text{GETEXISTINGVIRTUALNODES}(n_{curr}, \mathcal{N})$
9:       $n'_{curr} \leftarrow \emptyset$
10:      **for all** $n' \in N'_{curr}$ **do**
11:        **if** $fd^N(n') < leak^{allowed}$ **then**
12:          $n'_{curr} \leftarrow n'$
13:          **break**
14:      **if** $n'_{curr} = \emptyset$ **then**
15:        **if** $\text{IPADDRESSAVAILABLE}(n_{curr}) = false$ **then**
16:          **return** $\mathcal{G}'$
17:        $n'_{curr} \leftarrow \text{CREATEVIRTUALNODE}(n_{curr})$
18:        $\mathcal{N} \leftarrow \mathcal{N} \cup n'_{curr}$
19:      $\text{EQUALIZEFLOWSFORPREVNODES}(\mathcal{G}, n_{curr}, n'_{curr})$
20:      $\text{EQUALIZEFLOWSFORNEXTNODES}(\mathcal{G}, n_{curr}, n'_{curr})$
21:      $leak^{current} \leftarrow |\max(fd^N) - \min(fd^N)|$
22:  $\mathcal{G}' \leftarrow (\mathcal{N}, \mathcal{L}, fd^N, fd^L)$
23: **procedure** $\text{EQUALIZEFLOWSFORPREVNODES}(\mathcal{G}, n_{curr}, n'_{curr})$
24:     **for** $n_{prev} \in \mathcal{G}.predecessors(n_{curr})$ **do**
25:       $n'_{prev} \leftarrow \text{GETCONNECTEDVIRTUALNODE}(n_{prev}, n'_{curr})$
26:       **if** $n'_{prev} = \emptyset$ **then**
27:         **if** $\text{IPADDRESSAVAILABLE}(n_{prev}) = false$ **then**
28:           $\mathcal{N} \leftarrow \mathcal{N} / n'_{curr}$
29:           **return** $\mathcal{G}'$
30:        $n'_{prev} \leftarrow \text{CREATEVIRTUALNODE}(n_{prev})$
31:       $l'_{in} \leftarrow (n'_{prev}, n'_{curr}), l_{in} \leftarrow (n_{prev}, n_{curr})$
32:       $\mathcal{L} \leftarrow \mathcal{L} \cup l'_{in}$
33:       $fd^L(l'_{in}) \leftarrow fd^L(l_{in})/2, fd^L(l_{in}) \leftarrow fd^L(l_{in})/2$
34:       $\text{EQUALIZEFLOWSFORPREVNODES}(\mathcal{G}, n_{prev}, n'_{prev})$
35: **procedure** $\text{EQUALIZEFLOWSFORNEXTNODES}(\mathcal{G}, n_{curr}, n'_{curr})$
36:     **for** $n_{next} \in \mathcal{G}.successors(n_{curr})$ **do**
37:       $n'_{next} \leftarrow \text{GETCONNECTEDVIRTUALNODE}(n_{next}, n'_{curr})$
38:       **if** $n'_{next} = \emptyset$ **then**
39:         **if** $\text{IPADDRESSAVAILABLE}(n_{next}) = false$ **then**
40:           $\mathcal{N} \leftarrow \mathcal{N} / n'_{curr}$
41:           **return** $\mathcal{G}'$
42:        $n'_{next} \leftarrow \text{CREATEVIRTUALNODE}(n_{next})$
43:       $l'_{out} \leftarrow (n'_{curr}, n'_{next}), l_{out} \leftarrow (n_{curr}, n_{next})$
44:       $\mathcal{L} \leftarrow \mathcal{L} \cup l'_{out}$
45:       $fd^L(l'_{out}) \leftarrow fd^L(l_{out})/2, fd^L(l_{out}) \leftarrow fd^L(l_{out})/2$
46:       $fd^N(n'_{next}) \leftarrow fd^N(n_{next})/2$
47:       $\text{EQUALIZEFLOWSFORNEXTNODES}(\mathcal{G}, n_{next}, n'_{next})$

---

The process of equalizing the tracing flow distribution depends on the topology leakage and the obfuscation threshold specified by the network operator **10**. Initially, the algorithm takes as input the logical topology G, the leakage reduction $\tau_l$ (e.g., 40%), and the number of fixed virtual nodes per real node virtual^fixed (e.g., 4) and then computes the maximum leakage allowed leak^allowed based on the current leakage leak^current and the specified leakage reduction (lines 1 to 2 of **Algorithm 2).** Next, the obfuscation algorithm proceeds to add a fixed number (virtual^fixed ) of virtual nodes to all real nodes, and to connect those nodes with their neighbours, forming virtual links (lines 3 to 5). The algorithm is executed for as long as the current topology leakage leak^current is above the allowed leakage leak^allowed (line 6). To reduce leak$^{current}$, the algorithm first chooses the node $n_{curr}$ whose flow density is the highest among all nodes (line 7), retrieves its existing virtual nodes N'$_{curr}$ and checks whether the flow density of (at least) one of them is below the allowed leakage leak$^{allowed}$ (lines 8 to 11). If so, the algorithm chooses such virtual node (denoted as n'$_{curr}$) to lower the current leakage leak$^{current}$ (lines 12 to 13). Otherwise, it does so by creating a new virtual node n'$_{curr}$ (upon checking that there are IP addresses available in the corresponding subnet) (lines 14 to 18). Either with the existing or the newly generated virtual node, the algorithm aims to equalize the flow density of the current node. For this purpose, it creates virtual nodes in all its previous neighbour nodes (lines 19 to 20). This task is achieved through the sub-procedure "EQUALIZEFLOWSFORPREVNODES" (line 23). To that end, it first explores all previous nodes for a given current node $n_{curr}$ (line 24). For each previous node $n_{prev}$, it attempts to find a previous virtual node n'$_{prev}$ that is connected with the current virtual node n'$_{curr}$ (lines 24 to 25). If no previous virtual node is found, it creates a new virtual node for the previous node (if there are IP addresses in the previous node) (lines 26 to 30). Following this, it creates an incoming virtual link and splits the flow density to the virtual link l'$_{in}$ and real incoming link $l_{in}$ equally (lines 31 to 33). This process is repeated in a recursive way until virtual nodes are created for all previous nodes (line 34), and then also in the opposite direction for all its subsequent nodes (lines 35 to 47). Whenever a single loop is finished (lines 6 to 20), the algorithm recomputes the current leakage leak$^{current}$ (line 21) and repeats this process again until the leakage is reduced to the desired leakage leak$^{desired}$.

Independently of the topology leakage in the original logical topology, the first step for the topology obfuscator **120** is always to generate a small, fixed number of (guard) virtual nodes in all real nodes in order to protect them from adversaries who can observe multiple, slightly different virtual topologies exposed over time. For example, all real nodes in Figure 4 contain two virtual nodes each for this purpose **(V4** and **V7** in node **E, V5** and **V8** in node **G,** and **V6** and V9 in node I). Essentially, the intuition behind this method is to use those virtual nodes to produce a sort of anonymity set - whose size does not need to be large - to avoid adversaries from inferring which nodes are real long-term. Therefore, those virtual nodes must always be present in any virtual topology exposed by the proposed method.

Afterwards, for each real node, the offline algorithm used by the topology obfuscator **120** equalizes the tracing flow distribution among the real nodes and the existing (guard) virtual nodes and computes the new topology leakage. If the topology leakage is still higher than the target (i.e., 120 flows), the topology obfuscator **120** creates additional virtual nodes (e.g., in Figure 4, the virtual node **V2** is created by the topology obfuscator) to further split tracing flows among virtual nodes, causing the popularity of certain nodes and links to decrease even further. To maintain consistent logical paths, all subsequent tracing packets within the same flow get the same set of logical and virtual nodes as the first tracing packet.

There exists an important aspect to be considered when adding virtual nodes to the virtual topology. From a security point of view, it is important for virtual logical nodes not to be connected to real logical nodes, since there can only be one node connected to a router's interface at a time and the latter are already connected to other (real) logical nodes. Otherwise, this could disclose to adversaries that two IP addresses belong to the same node. To satisfy this requirement, whenever the topology obfuscator **120** creates a virtual node in a real node (e.g., virtual node **V2** in real node **G),** the topology obfuscator **120** also creates a virtual node in each of its neighbour nodes (e.g., virtual node **V1** in real node **E** and virtual node **V3** in real node **I**) and then connects them so that they form fully disjoint paths from those containing all real logical node, as shown in Figure 4. As a result, adversaries who use path tracing tools can either obtain (i) E3 → G1 → 11, (ii) V4 --t V 5 --t V6, (iii) V7 --t V 8 --t V9 or (iv) V1 → V 2 --t V3.

The procedure is then repeated until the topology obfuscator **120** generates a virtual topology whose topology leakage is equal or below the target previously defined (e.g., 120 flows in the previous example) or until there are no IP addresses available in (at least) one of the subnets. Once this is finished, the topology obfuscator **120** outputs the number of virtual nodes that need to be created considering the previously defined obfuscation threshold. These are the virtual nodes available to the topology deployer **130** to obfuscate the network topology online, as explained right below.

III) Topology Deployer **130**

The last step is to deploy the previously virtual topology generated by the topology obfuscator **120** in the network leveraging SDN. The topology deployer **130** generates flow-rules and instructs routers to reply to tracing packets either with their real IP addresses or with a fake one (the IP address of the real node or the IP address of any of the created virtual nodes). The deployment of the virtual topology can be divided into two steps, III.i) the realization of virtual nodes using SDN and III.ii) the assignation of IP addresses to virtual nodes, here explained:

III.i) Realizing virtual nodes: Leveraging the lack of security mechanisms to preserve the integrity and authenticity of tracing packets, the topology deployer **130** modifies the source IP address field in tracing responses in order to create virtual nodes and links in the logical topology. This requires some (minor) configuration changes in the network that only need to be done once. As SDN-enabled routers do not decrease the TTL value by default, the topology deployer **130** installs a permanent flow-rule in all routers with the action Decrement IP TTL, so that they decrement the TTL field by one in the tracing packets that the routers receive. It is important to note that only one flow rule is required for this in each router and that the topology deployer **130** does not require routers to keep any other state. In addition, the SDN controller **500** sends a Set Async Config OpenFlow packet to each router to enable the Invalid TTL flag. By doing so, every time a router receives a tracing packet for which the TTL is invalid, the router automatically encapsulates it within a Packet-In OpenFlow packet and forwards it to the SDN controller **500**. The controller **500** keeps an obfuscation map that is constantly being updated, which comprises one or more tuples of three elements: {flow ID, router interface and response IP address}. Table 2 shows an example of 3-tuples forming the obfuscation map.

**Table 2**

| Flow ID | Interface | Response IP address |
|---|---|---|
| 10.0.1/24 → 10.0.0/24 | G1 (10.0.2.1) | V1: 10.0.2.101 |
| 10.0.4/24 → 10.0.0/24 | G1 (10.0.2.1) | V2: 10.0.2.102 |

The flow ID refers to an identifier of a tracing packet flow from a source **501** to a destination **502** and is defined by the source and destination IP address prefix, the interface denotes the router interface where the tracing packet is received, and the response IP address corresponds to the IP address assigned to the tracing response by the topology deployer **130.**

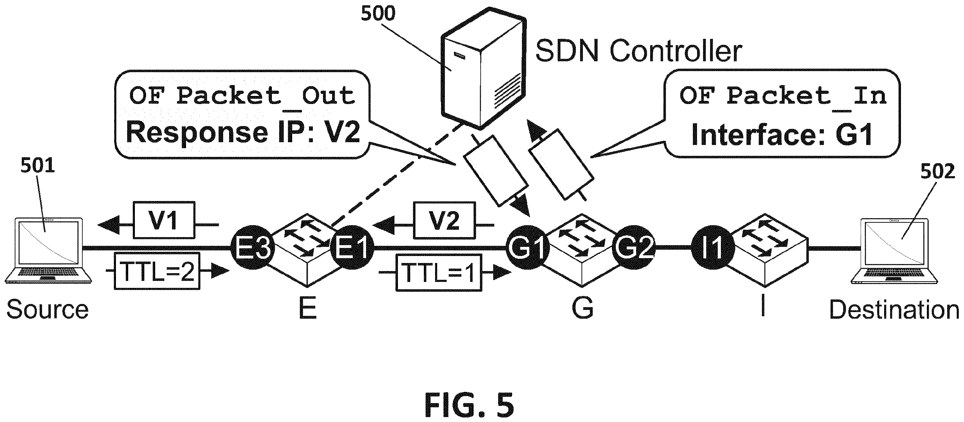

Figure 5 shows an example of tracing response generation by the topology deployer **130**. Suppose the interface G1 receives a tracing packet (belonging to a new tracing flow). The first step is for router G to send it to the controller via an Open Flow Packet-In packet. (Note that in any SDN network, tracing packets are processed by the control plane and hence always need to be forwarded to the SDN controller **500)**. Then, the controller **500** chooses a valid response IP from the obfuscation map and sends an OpenFlow Packet-Out packet to router G containing a crafted tracing response with the virtual IP address V2 (see Figure 5). Figure 5 shows the example scenario to realize virtual nodes V1 and V2 in the path tracing tool when detecting a tracing packet whose TTL is 1 from the interface G1. The following Table 3 shows the corresponding result of response generation; in the example of Table 3, the result value of the virtual IP address of node V1 is 10.0.2.101 and the result value of the virtual IP address of node V2 is 10.0.2.102.

**Table 3**

```
root@ambuhser:~# traceroute -n -N 1 -q 1 -m 2 10.0.0.3
traceroute to 10.0.0.3 (10.0.0.3), 2 hops max, 60 byte packets
        1              10.0.3.101           5.872 ms
        2              10.0.2.101           5.175 ms
root@ambuhser:~# traceroute -n -N 1 -q 1 10.0.0.3
traceroute to 10.0.0.3 (10.0.0.3), 30 hops max, 60 byte packets
        1              10.0.3.102           5.073 ms
        2              10.0.2.102           15.762 ms^C
```

III.ii) Assigning IP addresses to virtual nodes: To assign IP addresses to newly generated virtual nodes, the topology deployer **130** can follow various strategies. One possibility is to allocate random IP addresses to virtual nodes. However, the use of random IP addresses in tracing responses might be noticeable to adversaries, which could then leverage this information to distinguish between real and virtual nodes. Moreover, this approach might not maintain the utility of the path tracing information. Instead, the topology deployer **130** opts for assigning virtual nodes randomly-chosen IP addresses within the same subnet as their real logical nodes. To avoid using already assigned IP addresses, the topology deployer periodically interacts with the SDN controller **500** and retrieves the list of assigned IP addresses from its topology discovery services. The idea is to choose IPs within the same subnet as the real node at random but excluding those that have already been assigned.

Once the virtual topology is exposed, the topology deployer **130** continuously monitors all incoming tracing flows for obfuscating the network topology in long term. Every time a node receives an expired tracing packet (with TTL=0) in one of its interfaces, it notifies the topology deployer **130** and the topology leakage of the virtual topology is re-computed. If the topology obfuscator **120** detects that the topology leakage is above the defined obfuscation threshold, it makes the necessary changes to the exposed virtual topology to decrease the topology leakage while creating as few virtual nodes as possible. The virtual topology is adjusted by the topology obfuscator **120** only if, after receiving a new tracing flow, the topology obfuscator **120** detects that the topology leakage is above the defined threshold value (based on the obfuscation threshold or tolerated limit defined as input by the network operator **10)**. The goal is always to keep the current leakage below the allowed_leakage. If this condition is not satisfied, the virtual topology is re-adjusted so that the current leakage is reduced sufficiently to meet the previous condition. Recall that the maximum number of virtual nodes that can be produced is determined by the output of the topology obfuscator **120.** Otherwise, the topology deployer **130** balances the incoming tracing packets among existing real and virtual nodes.

The addition or removal of virtual nodes to/from the virtual topology (to decrease its topology leakage) does not leak any useful information to adversaries. This is because the topology obfuscator **120** adds a fixed number of virtual nodes - which are always present in all virtual topologies exposed - to permanently protect all real nodes in the network. It is not a problem if a few real nodes are added or removed, since adversaries are unable to know how many of such nodes are real nodes and how many of them are virtual ones. In practice network operators could decide to generate a different number of permanent virtual nodes per node. This approach makes it even harder for adversaries to learn any information about the number of real and virtual nodes being added or removed.

Above, the main components of the system have been described for the first variant of implementation to hinder adversaries from knowing which are the most popular nodes and links. Next, a second variant of implementation is described by explaining the differences from the first one.

Unlike the first variant, the second variant equalizes the tracing flow distributions on-the-fly (i.e., as tracing packets are sent to the network) and hence is fully online. This allows network operators **10** who do not have (or do not want to use) past attack data to use the invention too, since network operators **10** only need to provide the network topology as input to the system/method in this second variant. The network operators **10** can set the desired obfuscation (tolerated) limit as input to the topology analyser **110**. All this input information is used along with the received tracing packets to compute the current topology leakage and reduce it to a large extent. In this case, the desired obfuscation limit refers to a tolerated number of tracing flows, which is the maximum difference in number of tracing flows between any pair of nodes allowed/tolerated in the network. From this point onward, the system/method in this second variant follows a similar obfuscation procedure to the one shown in the first variant. The only difference compared to the first variant is that now the topology obfuscator **120** is not limited to using solely the number of virtual nodes generated offline. As a result, the topology obfuscator **120** can create as many virtual nodes as needed to keep the topology leakage under the maximum tolerated value for as long as there are IP addresses in the subnets of the real nodes available for the topology deployer **130** to deploy the created virtual nodes.

To demonstrate the feasibility of the proposed solution, in any of the two variants, a full prototype has been implemented by using Software-Defined Networking (SDN). Unlike prior-art systems, the experiments disclosed here have been performed using realistic network topologies along with their corresponding real IP addresses. Extensive evaluations both in software and hardware have been performed and the following results show that the proposed solution is effective at equalizing the tracing flow distributions of small, medium and large networks at the cost of creating a reasonable number of virtual nodes and while preserving the utility of path tracing information, even when only a small number of routers within the network support SDN. Overall, the proposed solution allows for a significant reduction of the topology leakage and hence increases the cost of performing successful LFAs. Also, the security of the solution under a wide variety of attacks has been proved.

For the prototype, a separate SDN application implemented each of the three modules described before, namely (i) topology analyser, (ii) topology obfuscator and (iii) topology deployer. Two additional SDN applications are included in the proposed obfuscation system: a) tracing flow forwarding manager and b) alias resolution handler. The former is used to maintain information about the tracing flows sent to routers and to install rules for forwarding unexpired tracing packets to a destination, whereas the latter intercepts tracing packets that target virtual nodes and generates valid responses to those packets in order to prevent adversaries from fingerprinting routers. The SDN applications run atop Ryu v4.29, a widely known open-source SDN controller. To evaluate the proposed obfuscation algorithms, it was leveraged the Mininet network simulator, which runs Open vSwitch v2.5.5 and supports the OpenFlow v1.3 specification, and the CAIDA Internet Topology Data Kit (ITDK) dataset, which comprises a set of router-level network topologies. As those datasets incorporate real IP addresses observed in the wild, they can be used for simulating adversaries who use path tracing tools to discover popular nodes within an AS. The following three networks were selected: (i) AS 13576 (15 physical nodes and 30 links), (ii) AS 35132 (30 physical nodes and 60 links), and (iii) AS 35575 (71 physical nodes and 140 links) in order to evaluate the suitability of the proposed system when applied to small, medium, and large-sized networks. It is considered that each node sent 1K tracing flows to each of the remaining nodes in the network to construct the initial logical topology. Similarly, for evaluations 1-5, each host sent 1K tracing flows to each of the remaining hosts.

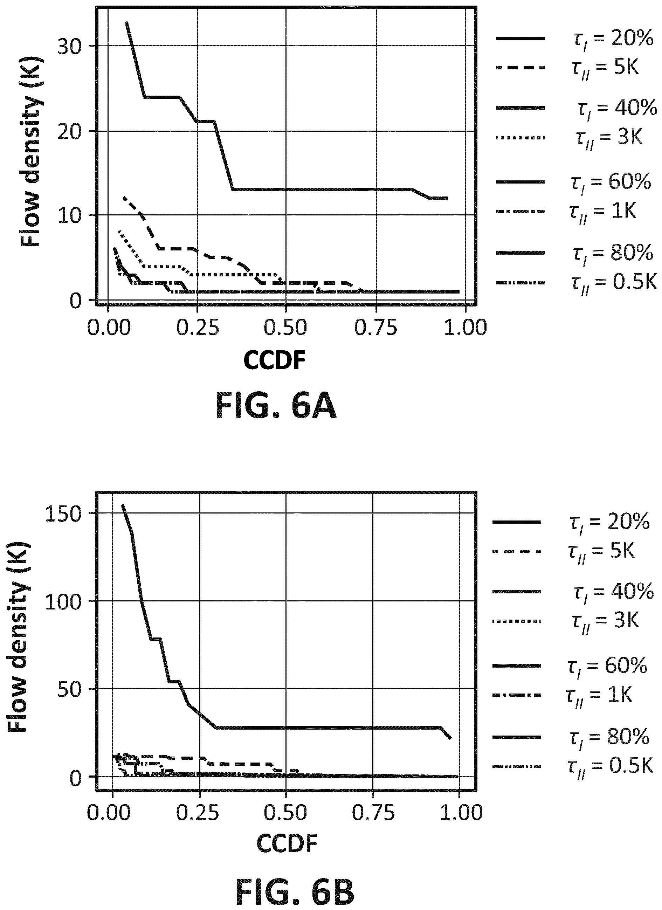

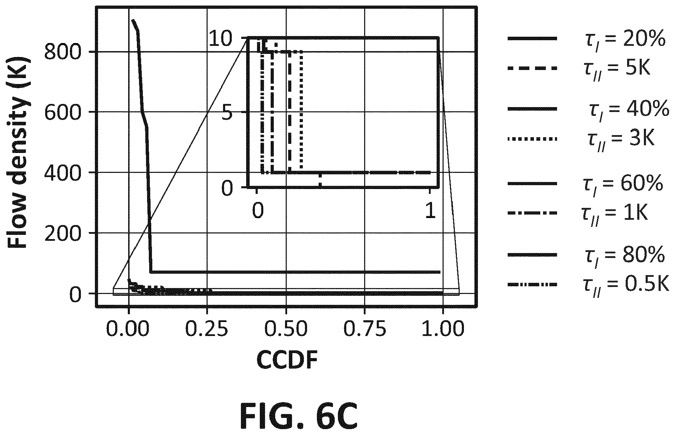

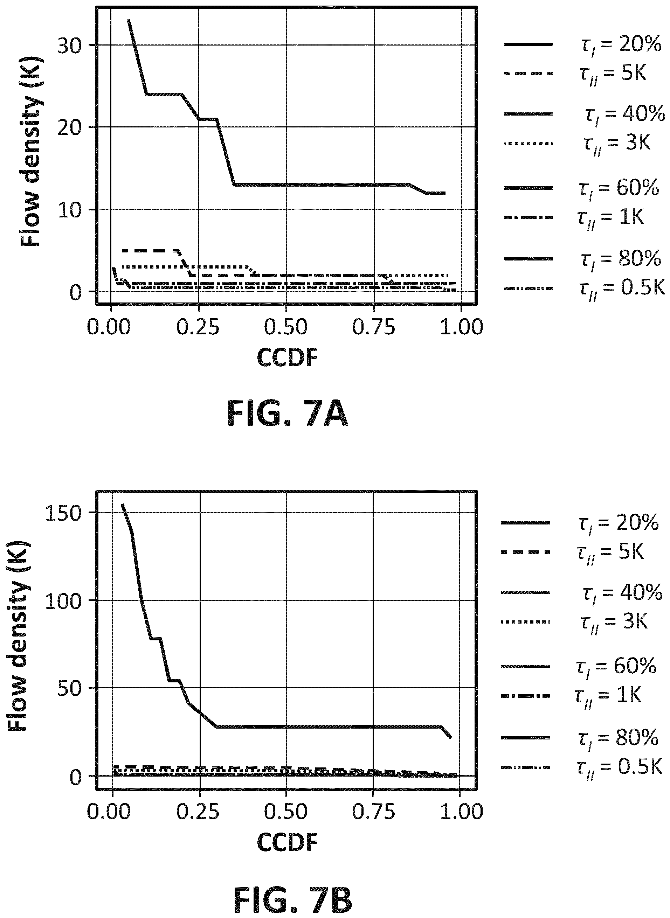

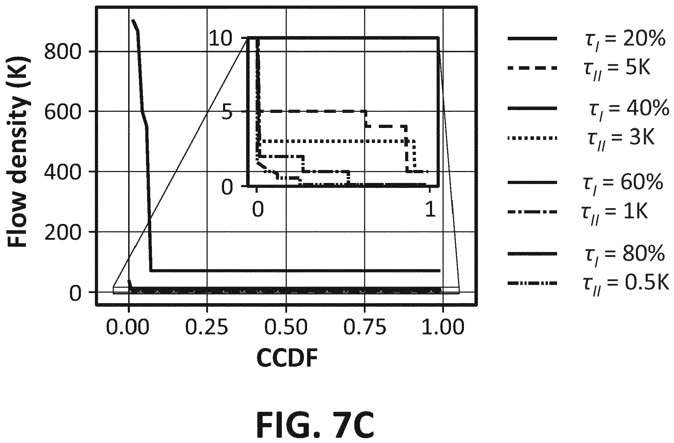

The two variants of the proposed system were tested using several obfuscation thresholds. In the first variant, the obfuscation threshold denoted by $\tau_I$, refers to the desired topology leakage reduction. In contrast, in the second variant, the obfuscation threshold denoted by $\tau_{II}$, refers to the maximum difference in number of tracing flows between any pair of nodes allowed in the network. Figures 6A-6C show the inverse Complementary Cumulative Distribution Functions (CCDF) of flow densities respectively measured in the three network topologies for the first variant, and Figures 7A-7C show the inverse CCDF of flow densities respectively measured in the three network topologies for the second variant: Figure 6A and 7A correspond to small-sized network (AS 13576), Figure 6B and 7B correspond to medium-sized network (AS 35132), and Figure 6C and 7C correspond to large-sized network (AS 35575). An ideal result would be that tracing flow distributions in nodes and links exhibit close to horizontally flattened patterns (i.e., the $\tau_I$ =80% case is the best one). As expected, the selection of strict obfuscation thresholds leads to very equalised path tracing flow distributions. However, for both variants, the tracing flow distributions in the three network topologies are largely equalised even when the least strict obfuscation thresholds are used (i.e., $\tau_I$ =20% and $\tau_{II}$ =0.5K). For example, about top 60% nodes in small and medium ASes and top 90% of nodes in the large AS exhibit similar flow density values with the least strict obfuscation threshold $\tau_{II}$ =5K (see dashed green lines). Overall, this experiment shows that the obfuscation algorithms used to equalize the tracing flow distributions are very effective at hiding the popularity of nodes and links in the network. The more horizontally flattened graphic in Figures 6 and 7, the more flow density distributions are equalized.

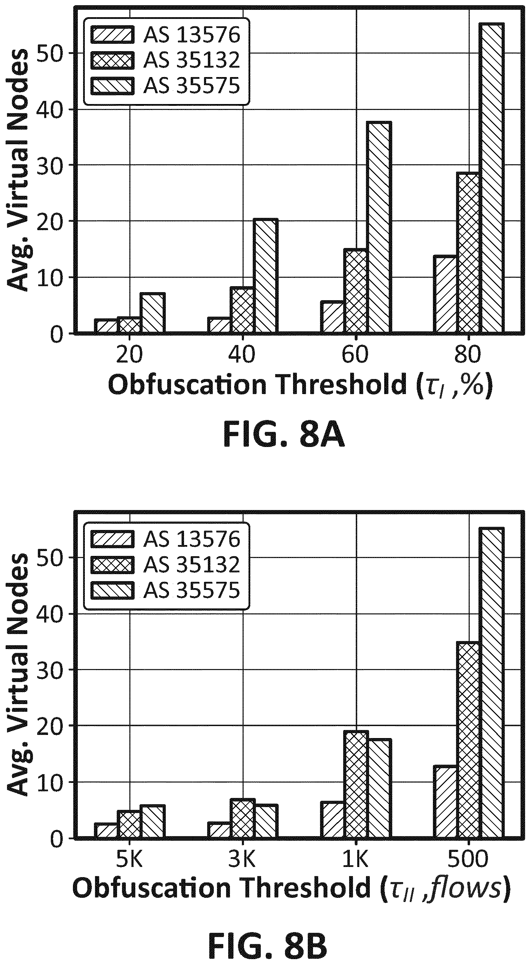

For the analysis of the number of virtual nodes required to be created for achieving different levels of obfuscation, Figures 8A-8B show that the stricter the obfuscation threshold is, the more virtual nodes are needed. For example, in the first variant, as shown in Figure 8A, using the strictest obfuscation threshold ($\tau_I$ =80%) in the large AS requires around 75 virtual nodes in each router, which is 9x larger than when the loosest threshold ($\tau_I$ =20%) is applied. However, only with the loosest threshold, the proposed system can equalize the tracing flow distribution of the large AS considerably while creating a reasonably small number of virtual nodes (around 9 virtual nodes in each real node which results in a total number of virtual nodes of around 600). Figure 8B shows the same for the second variant.

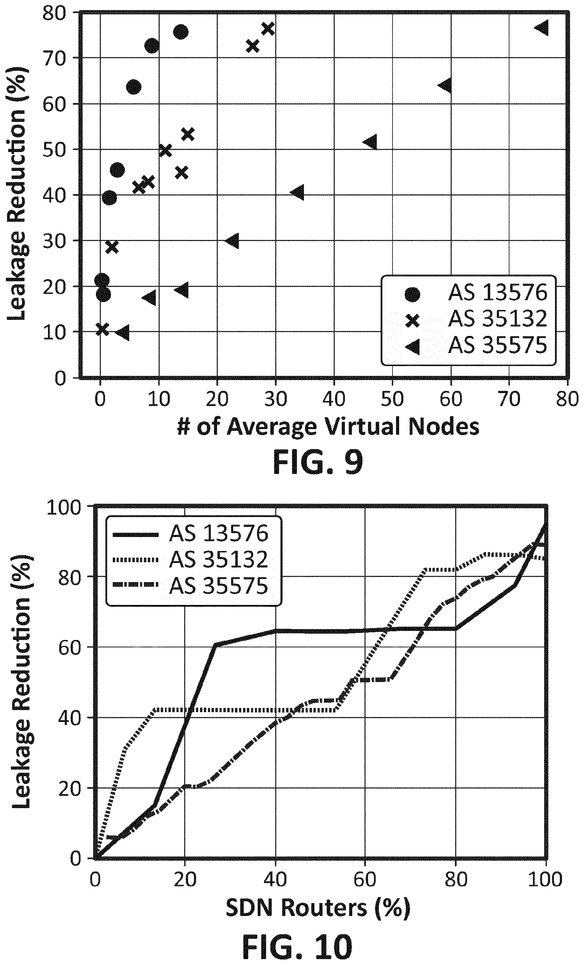

Moreover, some experiments were performed to investigate the relationship between the number of virtual nodes generated and the achieved topology leakage reduction for the three network topologies. Figure 9 shows the trade-off between topology leakage and the required virtual nodes for a single router. One leakage denotes the amount of 1 million flows (i.e., flow density). For the large AS network, the number of virtual nodes required grows linearly as the topology leakage reduction increases, as shown in Figure 9. However, it is observed that this does not always hold in all network topologies. For example, using 14 virtual nodes in each router in the small AS achieves a 76% topology leakage reduction; note that this only improves the topology leakage reduction by just 5% compared to the case when 9 virtual nodes are used in each router. This experiment shows that there is a need to find an optimal balance between the topology leakage reduction and the number of virtual nodes such that the topology leakage is reduced significantly while keeping the number of created virtual nodes as small as possible. As the results reveal, there might be a point where it is required to add many virtual nodes to lower the topology leakage only very slightly. The network operators can use this to determine the optimal number of virtual nodes that need to be created.

Furthermore, the feasibility of deploying the proposed obfuscation method in networks where only a subset of routers support SDN is analysed too. In such a case, only SDN-enabled routers can obfuscate their interfaces; other routers are forced to expose their real interfaces to tracing flows. Particularly, the case in which network operators decide to use SDN in centralised core routers is considered. To that end, firstly the betweenness centrality is computed for all physical nodes and incrementally the nodes with the highest centrality as SDN routers are selected. Then, the topology leakage reduction is measured when varying the percentage of SDN-capable devices in the network. As it is expected that such central routers will receive many more tracing flows than others, the strictest obfuscation threshold is used: $\tau_{II}$ =0.5K. Figure 10 shows that, by just having 20% of SDN-capable routers, the proposed obfuscation method was able to reduce the topology leakage by 40% in the small and medium ASes. In contrast, in the case of the large AS, the results indicate that there exists a linear relation between the topology leakage reduction and the number of SDN-capable routers in the network. Interestingly, these results also show that having SDN in more than 80% and 50% of their routers for the small and medium ASes does not lead to significant improvements in terms of leakage reduction, making this deployment strategy (80% and 50%, respectively) the most optimal. As these high-centrality nodes received many tracing flows, EqualNet was able to efficiently apply its obfuscation algorithms in order to lower the topology leakage. Overall, the experiments showed that the proposed obfuscation method can also significantly reduce the topology leakage in networks where only some of its routers support SDN.

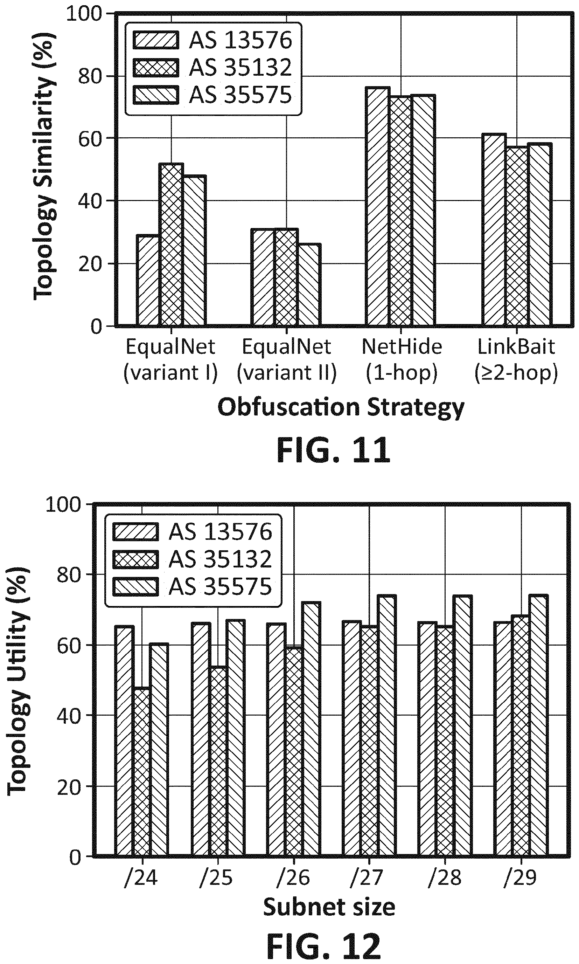

To assess the security, the topology similarity of virtual topologies generated by the proposed obfuscation method is measured and compared them with those virtual topologies produced by existing network obfuscation solutions. Moderate obfuscation thresholds ($\tau_I$ =40% and $\tau_{II}$ =3K) are used in both variants of the proposed methods. Figure 11 shows a comparison between the two variants and existing solutions (NetHide and LinkBait) in terms of the topology similarity that they offer. The lower topology similarity (in %), the more secure the virtual topology is. The results show that the proposed obfuscation method is able to produce the most dissimilar virtual topologies (in the best case a 76% similarity reduction is achieved). This stems from the fact that the proposed obfuscation method expands the topology space by adding virtual nodes and links. This is in contrast to previous solutions, whose virtual topologies did not experience a significant similarity reduction. To illustrate this, consider the 2-hop obfuscation strategy followed by LinkBait, which exhibited (at best) 58% similarity reduction. For a fair comparison with the proposed obfuscation method and Nethide, recall that, unlike the previous, LinkBait does not intend to provide utility in the virtual topologies it generates; without this requirement we note that it is easier to expose dissimilar virtual topologies.

Furthermore, the topology utility of the created virtual topologies is analysed using the definition of this utility metric described before. For this, different subnet-level traces (e.g., 10.0.2/24 → 10.0.3/24) from the CAIDA dataset are simulated. To that end, a realistic range of prefixes that can be employed for a single node or link (e.g., from /24 to /29) is considered. Figure 12 shows that the proposed obfuscation method can provide 60% utility in average for all network prefixes. The case when it did not achieve high utility (48% in AS 35132 for /24 prefix) is because of the way the IP assignment is done. In that AS, there are several physical nodes with IP addresses which, under various possible prefixes, would belong to the same subnet.

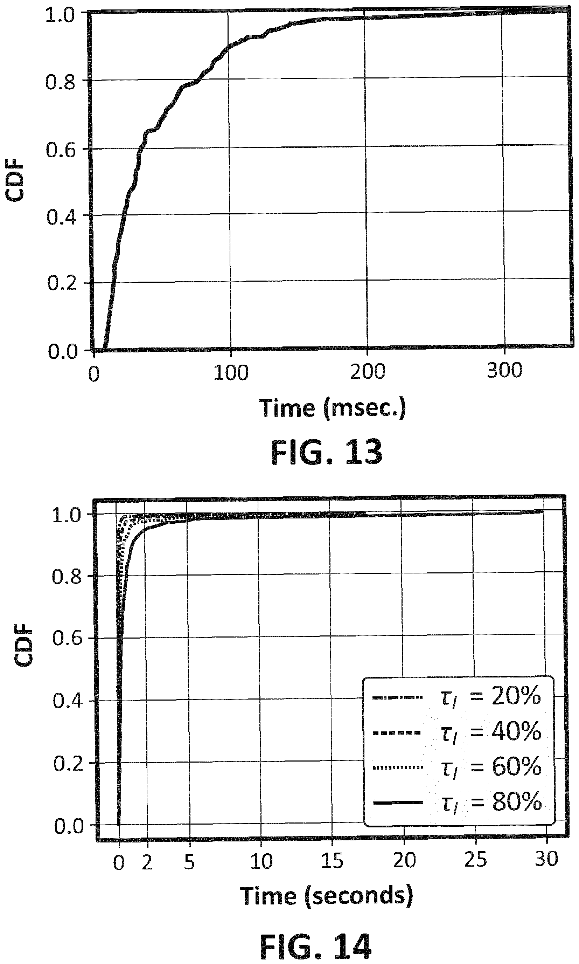

In order to verify the scalability of Algorithms 1 and 2 previously presented, 200 ASes from the CAIDA dataset whose size spans over small (61 nodes) to large networks (206 nodes) are randomly selected. For each of the 200 ASes, Figures 13 and 14 show respectively the distributions of: (i) the measured time it takes to generate logical topologies (measured execution time for Algorithm 1) and (ii) the measured time it takes to estimate virtual nodes needed offline (measured execution time for Algorithm 2). The results indicate that logical topology generation (Algorithm 1) takes less than 100 milliseconds in most ASes (around 80%) whose size is less than 150 nodes. For large-sized networks (206 nodes), it is observed that this can take up to 356 milliseconds. Similarly, estimating the number of virtual nodes needed (Algorithm 2) takes less than 2 seconds in most cases (around 95%) regardless of the chosen value for topology leakage reduction. If a stricter obfuscation threshold is chosen, the time it takes for the algorithm to be completed will increase (e.g., 30 seconds in $\tau_l$ =80%). Given these results, re-running the algorithms (e.g., when the physical topology changes significantly) will not impose a significant overhead.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for network topology obfuscation, comprising the following steps:

   - analysing a network topology, by a topology analyser (110), to obtain a logical topology corresponding to an adversary's view of the network topology and a tracing flow distribution, from an input (100) to the topology analyser (110) consisting of a physical topology provided by a network operator (10), a forwarding behaviour of the network topology and tracing flows of the adversary;
   - generating a virtual topology, by a topology obfuscator (120) receiving the logical topology and the tracing flow distribution from the topology analyser (110), wherein the virtual topology comprises a number of virtual nodes and links, the virtual nodes being created by the topology obfuscator (120) to equalize the tracing flow distribution, wherein the number of virtual nodes created by the topology obfuscator (120) which equalizes the tracing flow distribution is determined by a topology leakage computed as the difference between flow density of the most popular node and flow density of the least popular node, wherein the most popular node is the node receiving the most tracing flows and the least popular node is the node receiving the least tracing flows in the network;
   - deploying the generated virtual topology, by a topology deployer (130), into real nodes and links of the network using software-defined networking, SDN;
   - continuously monitoring all the tracing flows incoming in the network and compares the topology leakage with a threshold value defined by the network operator (10) and, if the topology leakage exceeds the threshold value, the number of virtual nodes and links created by the topology obfuscator (120) is adjusted and notified to the topology deployer (130) to balance the incoming tracing flows among real nodes and the adjusted number of virtual nodes created by the topology obfuscator (120).

2. The method according to claim 1, wherein the forwarding behaviour of the network topology and the adversary's tracing flows are provided by the network operator (10), and wherein the number of virtual nodes and links created by the topology obfuscator (120) meets that the topology leakage computed for the virtual topology generated by the topology obfuscator (120) is equal or below the threshold value defined as an obfuscation threshold ($\tau$) indicating a percentage of topology leakage reduction provided by the network operator (10).

3. The method according to claim 1, wherein the adversary's tracing flows are obtained online as tracing flows arrive to the network, and wherein the number of virtual nodes and links created by the topology obfuscator (120) meets that the topology leakage computed for the virtual topology generated by the topology obfuscator (120) is equal or below the threshold value defined as a tolerated limit of tracing flows indicating a maximum difference in number of tracing flows between any pair of nodes tolerated in the network.

4. The method according to any preceding claim, wherein deploying the virtual topology by the topology deployer (130) comprises:

- realizing the virtual nodes by generating one flow-rule to instruct SDN-enabled routers controlled by a SDN controller (500) to reply to tracing packets, wherein replying to the tracing packets comprises:

when an SDN-enabled router detects an expired tracing packet, belonging to an incoming tracing flow, the router sends the packet to the SDN controller (500) and the SDN controller (500) computes the current topology leakage, checks if the current topology leakage exceeds the threshold value and selects an IP address to reply to the tracing packet, the IP address being either the real router's IP address or the virtual IP address of any of the virtual nodes belonging to the real node; and

- assigning IP addresses to the virtual nodes either by allocating randomly-chosen IP addresses within the same subnet of the real nodes to which the virtual nodes belong or by retrieving a list of assigned IP addresses from the topology discovery services of the SDN controller (500).

5. The method according to any preceding claim, wherein obtaining the logical topology comprises running the following steps of a graph-based algorithm by the topology analyser (110):

i) picking an adversary's tracing flow, which specifies how many tracing flows are sent from a source to a destination,

ii) computing a physical path which contains all nodes of the physical topology along the shortest path from the source to the destination,

iii) visiting each physical node along the physical path by a tracing flow,

iv) for each visited physical node, obtaining a tracing response with the IP address of the router's ingress interface that identifies a logical current node,

v) creating a logical link from the last visited node to the current node,

vi) adding the logical link and node in the logical topology and the number of tracing flows to the flow density of the logical link and node,

vii) repeating steps i)-vi) for all physical nodes along the physical path for all the adversary's tracing flows.

6. The method according to any preceding claim, wherein generating the virtual topology comprises running the following steps of an offline obfuscation algorithm by the topology obfuscator (120):

i) taking as input the logical topology obtained by the topology analyser (110), a specified leakage reduction and a fixed number of virtual nodes per real node virtual

ii) computing an allowed leakage based on a current leakage and the specified leakage reduction,

iii) adding the fixed number of virtual nodes to all real nodes and forming virtual links by connecting the virtual nodes with their neighbours,

iv) as long as the current leakage exceeds the allowed leakage, reducing the current leakage by the following steps v)-vii):

v) choosing the node whose flow density is the highest among all nodes and retrieving its existing virtual nodes to check whether the flow density of at least one of the virtual nodes is below than the allowed leakage; and, if so, choosing said node to lower the current leakage; otherwise, creating an additional virtual node;

vi) either with the existing node or the additional virtual node, equalizing the flow density of the current node by creating virtual nodes in all its neighbour nodes and creating an incoming virtual link to split the flow density into the virtual link and the real incoming link equally

vii) repeating steps v) and vi) in a recursive way until virtual nodes are created for all previous nodes and in the opposite direction for all its subsequent nodes and recomputing the current leakage.

7. A system for network topology obfuscation, comprising the following components:

- a topology analyser (110) configured to obtain a logical topology corresponding to an adversary's view of the network topology and a tracing flow distribution, from an input (100) to the topology analyser (110) consisting of a physical topology provided by a network operator (10), a forwarding behaviour of the network topology and tracing flows of the adversary;

- a topology obfuscator (120) configured to receive the logical topology and the tracing flow distribution obtained by the topology analyser (110), and to generate a virtual topology comprising a number of virtual nodes and links, the number of virtual nodes being created by the topology obfuscator (120) to equalize the tracing flow distribution and determined by a topology leakage computed as the difference between flow density of the most popular node and flow density of the least popular node, wherein the most popular node is the node receiving the most tracing flows and the least popular node is the node receiving the least tracing flows in the network;

- a topology deployer (130) configured to deploy the generated virtual topology, into real nodes and links of the network using software-defined networking, SDN, and to continuously monitor all tracing flows incoming in the network,

wherein, only if, after receiving an expired tracing packet in any of the incoming tracing flows, the topology obfuscator (120) compares the topology leakage with a threshold value defined by the network operator (10) and, if the topology leakage exceeds the threshold value, the number of virtual nodes and links created by the topology obfuscator (120) is adjusted and notified to the topology deployer (130) to balance the incoming tracing flows among real nodes and the adjusted number of virtual nodes created by the topology obfuscator (120).

8. The system according to claim 7, wherein the topology obfuscator (120) creates a number of virtual nodes which meets that the computed topology leakage is equal or below the threshold value defined as an obfuscation threshold ($\tau$) indicating a percentage of topology leakage reduction provided by the network operator (10), the network operator (10) providing the forwarding behaviour of the network topology and the adversary's tracing flows.

9. The system according to claim 7, wherein the adversary's tracing flows are obtained online as tracing flows arrive to the network and the topology obfuscator (120) creates a number of virtual nodes which meets that the computed topology leakage is equal or below the threshold value defined as a tolerated limit of tracing flows indicating a maximum difference in number of tracing flows between any pair of nodes tolerated in the network.

10. The system according to any of claims 7-9, wherein the topology deployer (130) is configured to deploy the virtual topology by:

- realizing the virtual nodes by generating one flow-rule to instruct SDN-enabled routers controlled by a SDN controller (500) to reply to tracing packets, wherein replying the tracing packets comprises:
when a SDN-enabled router detects an expired tracing packet, the router sends the packet to the SDN controller (500) and the SDN controller (500) computes the current topology leakage, checks if the current topology leakage exceeds the threshold value and select an IP address to reply to the tracing packet, the IP address being selected from the real IP address of the real node corresponding to the router and the virtual IP address of any of the virtual nodes belonging to the real node; and
- assigning IP addresses to the virtual nodes either by allocating randomly-chosen IP addresses within the same subnet of the real nodes to which the virtual nodes belong or by retrieving a list of assigned IP addresses from the topology discovery services of the SDN controller (500).

11. The system according to any of claims 7-10, wherein the topology analyser (110) is configured to obtain the logical topology by running the following steps of a graph-based algorithm:

i) picking an adversary's tracing flow, which specifies how many tracing flows are sent from a source to a destination,
ii) computing a physical path which contains all nodes of the physical topology along the shortest path from the source to the destination,
iii) visiting each physical node along the physical path by a tracing flow,
iv) for each visited physical node, obtaining a tracing response with the IP address of the router's ingress interface that identifies a logical current node,
v) creating a logical link from the last visited node to the current node,
vi) adding the logical link and node in the logical topology and the number of tracing flows to the flow density of the logical link and node,
vii) repeating steps i)-vi) for all physical nodes along the physical path for all the adversary's tracing flows.

12. The system according to any of claims 7-11, wherein the topology obfuscator (120) is configured to generate the virtual topology by running the following steps of an offline obfuscation algorithm:

i) taking as input the logical topology obtained by the topology analyser (110), a specified leakage reduction and a fixed number of virtual nodes per real node virtual,
ii) computing an allowed leakage based on a current leakage and the specified leakage reduction,
iii) adding the fixed number of virtual nodes to all real nodes and forming virtual links by connecting the virtual nodes with their neighbours,
iv) as long as the current leakage exceeds the allowed leakage, reducing the current leakage by the following steps v)-vii):
v) choosing the node whose flow density is the highest among all nodes and retrieving its existing virtual nodes to check whether the flow density of at least one of the virtual nodes is below than the allowed leakage; and, if so, choosing said node to lower the current leakage; otherwise, creating an additional virtual node;

vi) either with the existing node or the additional virtual node, equalizing the flow density of the current node by creating virtual nodes in all its neighbour nodes and creating an incoming virtual link to split the flow density into the virtual link and the real incoming link equally;

vii) repeating steps v) and vi) in a recursive way until virtual nodes are created for all previous nodes and in the opposite direction for all its subsequent nodes and recomputing the current leakage.

**Patentansprüche**

1. Verfahren zur Verschleierung der Netzwerktopologie, das die folgenden Schritte umfasst:

   • Analysieren einer Netzwerktopologie durch einen Topologieanalysator (110), um eine logische Topologie zu erhalten, die der Ansicht eines Gegners über die Netzwerktopologie entspricht, und eine Ablaufverfolgungsverteilung von einem Eingang (100) zu dem Topologieanalysator (110), bestehend aus einer physischen Topologie, die von einem Netzwerkbetreiber (10) bereitgestellt wird, einem Weiterleitungsverhalten der Netzwerktopologie und Ablaufverfolgungsflüssen des Gegners;

   • Erzeugen einer virtuellen Topologie durch einen Topologieverschleierer (120), der die logische Topologie und die Tracing-Flow-Verteilung von dem Topologieanalysator (110) empfängt, wobei die virtuelle Topologie eine Anzahl virtueller Knoten und Verbindungen umfasst, wobei die virtuellen Knoten durch den Topologieverschleierer (120) erzeugt werden, um die Tracing-Flow-Verteilung auszugleichen, wobei die Anzahl der Knoten, die durch den Topologieverschleierer (120) erzeugt werden, der die Tracing-Flow-Verteilung ausgleicht, durch eine Topologie-Leckage bestimmt wird, die als die Differenz zwischen der Flussdichte des beliebtesten Knotens und der Flussdichte des am wenigsten beliebten Knotens berechnet wird, wobei der beliebteste Knoten der Knoten ist, der die meisten Tracing-Flows empfängt, und der am wenigsten beliebte Knoten der Knoten ist, der die wenigsten Tracing-Flows im Netzwerk empfängt;

   • Bereitstellen der generierten virtuellen Topologie durch einen Topologie-Deployer (130) in reale Knoten und Verbindungen des Netzwerks unter Verwendung von Software-Defined Networking, SDN;

   • kontinuierlich Überwachen alle im Netzwerk eingehenden Tracing-Flows und vergleichen der Topologie-Leckage mit einem vom Netzwerkbetreiber (10) definierten Schwellenwert und, wenn die Topologie-Leckage den Schwellenwert überschreitet, anpassen der Anzahl der vom Topologie-Obfuscater (120) erstellten virtuellen Knoten und Verbindungen (120) und dem Topologie-Deployer (130) mitgeteilt, um die eingehenden Tracing-Flüsse zwischen realen Knoten und der angepassten Anzahl virtueller Knoten, die vom Topologie-Obfuscater (120) erstellt wurden, auszugleichen.

2. Verfahren gemäß Anspruch 1, wobei das Weiterleitungsverhalten der Netzwerktopologie und die Verfolgungsströme des Gegners vom Netzwerkbetreiber (10) bereitgestellt werden und wobei die Anzahl der virtuellen Knoten und Verbindungen, die vom Topologieverschleierer (120) erstellt werden, dass die für die durch den Topologieverschleierer (120) erzeugte virtuelle Topologie berechnete Topologie-Leckage gleich dem oder kleiner als der Schwellenwert ist, der als Verschleierungsschwellenwert ($\tau$) definiert ist und einen Prozentsatz der durch den Netzwerkbetreiber (10) bereitgestellten Topologie-Leckagenreduzierung angibt.

3. Verfahren gemäß Anspruch 1, wobei die Verfolgungsflüsse des Gegners online als Verfolgungsflüsse im Netzwerk ankommen, erhalten werden, und wobei die Anzahl der virtuellen Knoten und Verbindungen, die durch den Topologieverschleierer (120) erstellt werden, so ist, dass die für die virtuelle Topologie, die durch den Topologieverschleierer (120) erzeugt wird, berechnet wird, gleich dem oder kleiner als der Schwellenwert ist, der als tolerierte Grenze von Tracing-Flüssen definiert ist, die eine maximale Differenz in der Anzahl von Tracing-Flüssen zwischen einem beliebigen Paar von Knoten, die in dem Netzwerk toleriert werden, anzeigen.

4. Verfahren gemäß einem der vorhergehenden Ansprüche, wobei das Bereitstellen der virtuellen Topologie durch den Topologiebereitsteller (130) umfasst:

   • Realisierung der virtuellen Knoten durch Erzeugung einer Flussregel, um SDN-fähige Router, die von einem SDN-Controller (500) gesteuert werden, anzuweisen, auf Tracing-Pakete zu antworten, wobei das Antworten auf die Tracing-Pakete Folgendes umfasst:

      ◦ wenn ein SDN-fähiger Router ein abgelaufenes Tracing-Paket erkennt, das zu einem eingehenden Tracing-Fluss gehört, sendet der Router das Paket an den SDN-Controller (500) und der SDN-Controller (500) berechnet die aktuelle Topologie-Leckage, prüft, ob die aktuelle Topologie-Leckage den Schwellenwert überschreitet, und wählt eine IP-Adresse aus, um auf das Tracing-Paket zu antworten, wobei die IP-Adresse entweder die IP-Adresse des realen Routers oder die virtuelle IP-Adresse eines der virtuellen Knoten ist, die zum realen Knoten gehören; und

• Zuweisen von IP-Adressen zu den virtuellen Knoten entweder durch Zuweisen zufällig ausgewählter IP-Adressen innerhalb desselben Subnetzes der realen Knoten, zu denen die virtuellen Knoten gehören, oder durch Abrufen einer Liste zugewiesener IP-Adressen von den Topologieerkennungsdiensten des SDN-Controllers (500).

5. Verfahren gemäß einem der vorhergehenden Ansprüche, wobei das Erhalten der logischen Topologie das Ausführen der folgenden Schritte eines graphbasierten Algorithmus durch den Topologieanalysator (110) umfasst:

    i) Auswählen eines Tracing-Flows eines Gegners, der angibt, wie viele Tracing-Flows von einer Quelle zu einem Ziel gesendet werden,
    ii) Berechnen eines physischen Pfads, der alle Knoten der physischen Topologie entlang des kürzesten Pfads von der Quelle zum Ziel enthält,
    iii) Besuchen jedes physischen Knotens entlang des physischen Pfads durch einen Tracing-Flow,
    iv) Erhalten einer Tracing-Antwort mit der IP-Adresse der Eingangsschnittstelle des Routers, die einen logischen aktuellen Knoten identifiziert, für jeden besuchten physischen Knoten,
    v) Erstellen einer logischen Verbindung vom zuletzt besuchten Knoten zum aktuellen Knoten, vi) Hinzufügen der logischen Verbindung und des Knotens in der logischen Topologie und der Anzahl der Tracing-Flows zur Flussdichte der logischen Verbindung und des Knotens,
    vii) Wiederholen der Schritte i) bis vi) für alle physischen Knoten entlang des physischen Pfads für alle Tracing-Flows des Gegners.

6. Verfahren nach einem der vorhergehenden Ansprüche, wobei das Erzeugen der virtuellen Topologie das Ausführen der folgenden Schritte eines Offline-Verschleierungsalgorithmus durch den Topologieverschleierer (120) umfasst:

    i) Nehmen als Eingabe die durch den Topologieanalysierer (110) erhaltene logische Topologie, eine spezifizierte Leckreduzierung und eine feste Anzahl virtueller Knoten pro realem Knoten,
    ii) Berechnung eines zulässigen Lecks basierend auf einem aktuellen Leck und der angegebenen Leckreduzierung,
    iii) Hinzufügen der festgelegten Anzahl virtueller Knoten zu allen realen Knoten und Bilden virtueller Verbindungen durch 20 Verbinden der virtuellen Knoten mit ihren Nachbarn;
    iv) solange das aktuelle Leck das zulässige Leck übersteigt, Reduzierung des aktuellen Lecks durch die folgenden Schritte v)-vii):
    v) Auswahl des Knotens, dessen Flussdichte unter allen Knoten am höchsten ist, und Abrufen seiner vorhandenen virtuellen Knoten, um zu überprüfen, ob die Flussdichte von mindestens einem der virtuellen Knoten unter der zulässigen Leckage liegt; und wenn dies der Fall ist, Auswahl des Knotens, um die aktuelle Leckage zu verringern; andernfalls Erstellung eines zusätzlichen virtuellen Knotens;
    vi) entweder mit dem vorhandenen Knoten oder dem zusätzlichen virtuellen Knoten die Flussdichte des aktuellen Knotens durch Erzeugen virtueller Knoten in allen seinen Nachbarknoten und Erzeugen einer eingehenden virtuellen Verbindung auszugleichen, um die Flussdichte gleichmäßig auf die virtuelle Verbindung und die reale eingehende Verbindung aufzuteilen
    vii) die Schritte v) und vi) rekursiv zu wiederholen, bis virtuelle Knoten für alle vorherigen Knoten und in der entgegengesetzten Richtung für alle nachfolgenden Knoten erzeugt sind, und die aktuelle Leckage neu zu berechnen.

7. System zur Verschleierung der Netzwerktopologie, das die folgenden Komponenten umfasst:

    • einen Topologieanalysator (110), der so konfiguriert ist, dass er eine logische Topologie, die der Ansicht eines Gegners über die Netzwerktopologie entspricht, und eine Ablaufverfolgungsverteilung von einem Eingang (100) zum Topologieanalysator (110) erhält, die aus einer physischen Topologie, die von einem Netzwerkbetreiber (10) bereitgestellt wird, einem Weiterleitungsverhalten der Netzwerktopologie und Ablaufverfolgungsflüssen des Gegners besteht;
    • einem Topologieverschleierer (120), der so konfiguriert ist, dass er die logische Topologie und die Tracing-Flow-Verteilung, die durch den Topologieanalysator (110) erhalten wird, empfängt und eine virtuelle Topologie erzeugt, die eine Anzahl virtueller Knoten und Verbindungen umfasst, wobei die Anzahl der virtuellen Knoten durch den Topologieverschleierer (120) erzeugt wird, um die Tracing-Flow-Verteilung auszugleichen, und durch eine Topologie-Leckage bestimmt wird, die als Differenz zwischen der Flussdichte des beliebtesten Knotens und der Flussdichte des am wenigsten beliebten Knotens berechnet wird, wobei der beliebteste Knoten der Knoten ist, der die meisten Tracing-Flows empfängt, und der am wenigsten beliebte Knoten der Knoten ist, der die wenigsten Tracing-Flows im Netzwerk empfängt;

• ein Topologie-Deployer (130), der so konfiguriert ist, dass er die erzeugte virtuelle Topologie unter Verwendung von Software-Defined Networking (SDN) in reale Knoten und Verbindungen des Netzwerks verteilt und alle im Netzwerk eingehenden Tracing-Flows kontinuierlich überwacht,

wobei der Topologieverschleierer (120) nur dann, wenn er nach dem Empfang eines abgelaufenen Tracing-Pakets in einem der eingehenden Tracing-Flüsse die Topologie-Leckage mit einem vom Netzwerkbetreiber (10) definierten Schwellenwert vergleicht und wenn die Topologie-Leckage den Schwellenwert überschreitet, die Anzahl der virtuellen Knoten und Verbindungen, die durch den Topologieverschleierer (120) erstellt wurden, anpasst und dem Topologie-Deployer (130) mitteilt, um die eingehenden Tracing-Flüsse zwischen realen Knoten und der angepassten Anzahl virtueller Knoten, die durch den Topologieverschleierer (120) erstellt wurden, auszugleichen.

8. System nach Anspruch 7, wobei der Topologieverschleierer (120) eine Anzahl virtueller Knoten erzeugt, die dafür sorgt, dass die berechnete Topologie-Leckage gleich oder kleiner als der als Verschleierungsschwellenwert (r) definierte Schwellenwert ist, der einen Prozentsatz der vom Netzwerkbetreiber (10) bereitgestellten Topologie-Leckagenreduzierung angibt, wobei der Netzwerkbetreiber (10) das Weiterleitungsverhalten der Netzwerktopologie und die Verfolgungsflüsse des Gegners bereitstellt.

9. System gemäß Anspruch 7, wobei die Verfolgungsflüsse des Gegners online erhalten werden, wenn Verfolgungsflüsse im Netzwerk ankommen, und der Topologieverschleierer (120) eine Anzahl virtueller Knoten erzeugt, die erfüllt, dass die berechnete Topologie-Leckage gleich oder unterhalb des Schwellenwerts ist, der als tolerierte Grenze von Verfolgungsflüssen definiert ist, die eine maximale Differenz in der Anzahl von Verfolgungsflüssen zwischen jedem Paar von Knoten, die im Netzwerk toleriert werden, angibt.

10. System gemäß einem der Ansprüche 7-9, wobei der Topologie-Deployer (130) so konfiguriert ist, dass er die virtuelle Topologie durch Folgendes bereitstellt:

• Realisierung der virtuellen Knoten durch Generieren einer Flussregel, um SDN-fähige Router, die von einem SDN-Controller (500) gesteuert werden, anzuweisen, auf Tracing-Pakete zu antworten, wobei das Antworten auf die Tracing-Pakete Folgendes umfasst:
wenn ein SDN-fähiger Router ein abgelaufenes Tracing-Paket erkennt, sendet der Router das Paket an den SDN-Controller (500) und der SDN-Controller (500) berechnet die aktuelle Topologie-Leckage, prüft, ob die aktuelle Topologie-Leckage den Schwellenwert überschreitet, und wählt eine IP-Adresse aus, um auf das Tracing-Paket zu antworten, wobei die IP-Adresse aus der realen IP-Adresse des realen Knotens, der dem Router entspricht, und der virtuellen IP-Adresse eines der virtuellen Knoten, die zu dem realen Knoten gehören, ausgewählt wird; und
• Zuweisen von IP-Adressen zu den virtuellen Knoten entweder durch Zuweisen zufällig ausgewählter IP-Adressen innerhalb desselben Subnetzes der realen Knoten, zu denen die virtuellen Knoten gehören, oder durch Abrufen einer Liste zugewiesener IP-Adressen von den Topologieerkennungsdiensten des SDN-Controllers (500).

11. System gemäß einem der Ansprüche 7-10, wobei der Topologieanalysator (110) so konfiguriert ist, dass er die logische Topologie durch Ausführen der folgenden Schritte eines graphbasierten Algorithmus erhält:

i) Auswählen eines Tracing-Flows eines Gegners, der angibt, wie viele Tracing-Flows von einer Quelle zu einem Ziel gesendet werden,
ii) Berechnen eines physischen Pfads, der alle Knoten der physischen Topologie entlang des kürzesten Pfads von der Quelle zum Ziel enthält,
iii) Besuchen jedes physischen Knotens entlang des physischen Pfads durch einen Tracing-Flow,
iv) Erhalten einer Tracing-Antwort mit der IP-Adresse der Eingangsschnittstelle des Routers, die einen logischen aktuellen Knoten identifiziert, für jeden besuchten physischen Knoten,
v) Erstellen einer logischen Verbindung vom zuletzt besuchten Knoten zum aktuellen Knoten,

vi) Hinzufügen der logischen Verbindung und des logischen Knotens in der logischen Topologie und der Anzahl der Tracing-Flows zur Flussdichte der logischen Verbindung und des logischen Knotens,
vii) Wiederholen der Schritte i) bis vi) für alle physischen Knoten entlang des physischen Pfads für alle Verfolgungsflüsse des Gegners.

12. System gemäß einem der Ansprüche 7 bis 11, wobei der Topologieverschleierer (120) so konfiguriert ist, dass er die virtuelle Topologie durch Ausführen der folgenden Schritte eines Offline-Verschleierungsalgorithmus erzeugt:

i) Nehmen als Eingabe die durch den Topologieanalysator (110) erhaltene logische Topologie, eine spezifizierte Leckreduzierung und eine feste Anzahl virtueller Knoten pro realem Knoten,
ii) Berechnung eines zulässigen Lecks basierend auf einem aktuellen Leck und der spezifizierten Leckreduzierung,
iii) Hinzufügen der festen Anzahl virtueller Knoten zu allen realen Knoten und Bilden virtueller Verbindungen durch Verbinden der virtuellen Knoten mit ihren Nachbarn,
iv) solange die aktuelle Leckage die zulässige Leckage übersteigt, Reduzierung der aktuellen Leckage durch die folgenden Schritte v)-vii):
v) Auswahl des Knotens, dessen Flussdichte unter allen Knoten am höchsten ist, und Abrufen seiner vorhandenen virtuellen Knoten, um zu überprüfen, ob die Flussdichte mindestens eines der virtuellen Knoten unter der zulässigen Leckage liegt; und wenn dies der Fall ist, Auswahl des Knotens, um die aktuelle Leckage zu verringern; andernfalls Erstellung eines zusätzlichen virtuellen Knotens;
vi) entweder mit dem vorhandenen Knoten oder dem zusätzlichen virtuellen Knoten die Flussdichte des aktuellen Knotens durch Erzeugen virtueller Knoten in allen seinen Nachbarknoten und Erzeugen einer eingehenden virtuellen Verbindung auszugleichen, um die Flussdichte gleichmäßig auf die virtuelle Verbindung und die reale eingehende Verbindung aufzuteilen;
vii) die Schritte v) und vi) rekursiv zu wiederholen, bis virtuelle Knoten für alle vorherigen Knoten und in entgegengesetzter Richtung für alle nachfolgenden Knoten erzeugt sind, und die aktuelle Leckage neu zu berechnen.

## Revendications

1. Procédé d'obfuscation de topologie de réseau, comprenant les étapes suivantes :

- l'analyse d'une topologie de réseau, par un analyseur de topologie (110), pour obtenir une topologie logique correspondant à une vue adverse de la topologie de réseau et une distribution des flux de traçage, à partir d'une entrée (100) sur l'analyseur de topologie (110) qui est constituée par une topologie physique fournie par un opérateur de réseau (10), un comportement de transmission de la topologie de réseau et des flux de traçage adverses ;
- la génération d'une topologie virtuelle, par un obfuscateur de topologie (120) qui reçoit la topologie logique et la distribution des flux de traçage en provenance de l'analyseur de topologie (110), dans lequel la topologie virtuelle comprend un certain nombre de noeuds virtuels et de liaisons virtuelles, les noeuds virtuels étant créés par l'obfuscateur de topologie (120) pour égaliser la distribution des flux de traçage, dans lequel le nombre de noeuds virtuels qui sont créés par l'obfuscateur de topologie (120) dans le but d'égaliser la distribution des flux de traçage est déterminé par une fuite de topologie qui est calculée en tant que différence entre une densité de flux du noeud le plus populaire et une densité de flux du noeud le moins populaire, et dans lequel le noeud le plus populaire est le noeud qui reçoit le plus de flux de traçage et le noeud le moins populaire est le noeud qui reçoit le moins de flux de traçage dans le réseau ;
- le déploiement de la topologie virtuelle générée, par un moyen de déploiement de topologie (130), à l'intérieur des noeuds réels et des liaisons réelles du réseau en utilisant une mise en réseau définie par logiciel, SDN ;
- la surveillance en continu de tous les flux de traçage qui arrivent dans le réseau et la comparaison de la fuite de topologie avec une valeur de seuil qui est définie par l'opérateur de réseau (10) et, si la fuite de topologie excède la valeur de seuil, le nombre de noeuds virtuels et de liaisons virtuelles qui sont créés par l'obfuscateur de topologie (120) est réglé et ce nombre réglé est communiqué au moyen de déploiement de topologie (130) pour équilibrer les flux de traçage arrivants entre les noeuds réels et le nombre réglé de noeuds virtuels qui sont créés par l'obfuscateur de topologie (120).

2. Procédé selon la revendication 1, dans lequel le comportement de transmission de la topologie de réseau et les flux de traçage adverses sont fournis par l'opérateur de réseau (10), et dans lequel le nombre de noeuds virtuels et de liaisons virtuelles qui sont créés par l'obfuscateur de topologie (120) satisfait le fait que la fuite de topologie qui est calculée pour la topologie virtuelle qui est générée par l'obfuscateur de topologie (120) est égale à la valeur de seuil qui est définie en tant que seuil d'obfuscation (□) qui représente un pourcentage de réduction de fuite de topologie émanant de l'opérateur de réseau (10), ou est en-deçà de cette même valeur de seuil.

3. Procédé selon la revendication 1, dans lequel les flux de traçage adverses sont obtenus en ligne lorsque des flux de traçage arrivent sur le réseau, et dans lequel le nombre de noeuds virtuels et de liaisons virtuelles qui sont créés par l'obfuscateur de topologie (120) satisfait le fait que la fuite de topologie qui est calculée pour la topologie virtuelle qui est générée par l'obfuscateur de topologie (120) est égale à la valeur de seuil qui est définie en tant que limite tolérée de flux de traçage qui représente une différence maximum en termes de nombre de flux de traçage entre les noeuds d'une quelconque paire de noeuds qui est tolérée dans le réseau, ou est en-deçà de cette même valeur de seuil.

4. Procédé selon l'une quelconque des revendications précédentes, dans lequel le déploiement de la topologie virtuelle par le moyen de déploiement de topologie (130) comprend :

- la matérialisation des noeuds virtuels en générant une règle de flux pour demander à des routeurs compatibles SDN qui sont commandés par un contrôleur SDN (500) de répondre à des paquets de traçage, dans lequel la réponse aux paquets de traçage comprend :
lorsqu'un routeur compatible SDN détecte un paquet de traçage qui a expiré, lequel appartient à un flux de traçage arrivant, le routeur envoie le paquet sur le contrôleur SDN (500) et le contrôleur SDN (500) calcule la fuite de topologie actuelle, vérifie si la fuite de topologie actuelle excède la valeur de seuil et sélectionne une adresse IP pour répondre au paquet de traçage, l'adresse IP étant soit l'adresse IP réelle du routeur, soit l'adresse IP virtuelle de l'un quelconque des noeuds virtuels appartenant au noeud réel ; et
- l'attribution d'adresses IP aux noeuds virtuels soit en allouant des adresses IP choisies de façon aléatoire à l'intérieur du même sous-réseau des noeuds réels auquel les noeuds virtuels appartiennent, soit en extrayant une liste d'adresses IP attribuées en provenance des services de découverte de topologie du contrôleur SDN (500).

5. Procédé selon l'une quelconque des revendications précédentes, dans lequel l'obtention de la topologie logique comprend l'exécution des étapes suivantes d'un algorithme basé sur graphe par l'analyseur de topologie (110) :

i) le prélèvement d'un flux de traçage adverses, lequel spécifie le nombre de flux de traçage qui sont envoyés depuis une source jusqu'à une destination ;
ii) le calcul d'une voie physique qui contient tous les noeuds de la topologie physique le long de la voie la plus courte depuis la source jusqu'à la destination ;
iii) la visite de chaque noeud physique le long de la voie physique par un flux de traçage ;
iv) pour chaque noeud physique visité, l'obtention d'une réponse de traçage avec l'adresse IP de l'interface d'entrée du routeur qui identifie un noeud actuel logique ;
v) la création d'une liaison logique depuis le dernier noeud visité jusqu'au noeud actuel ;
vi) l'ajout de la liaison logique et du noeud logique dans la topologie logique et du nombre de flux de traçage à la densité de flux de la liaison logique et du noeud logique ;
vii) la répétition des étapes i) à vi) pour tous les noeuds physiques le long de la voie physique pour tous les flux de traçage adverses.

6. Procédé selon l'une quelconque des revendications précédentes, dans lequel la génération de la topologie virtuelle comprend l'exécution des étapes suivantes d'un algorithme d'obfuscation hors ligne par l'obfuscateur de topologie (120) :

i) la considération, en tant qu'entrée, de la topologie logique qui est obtenue par l'analyseur de topologie (110), d'une réduction de fuite spécifiée et d'un nombre fixe de noeuds virtuels par noeud réel ;
ii) le calcul d'une fuite autorisée sur la base d'une fuite actuelle et de la réduction de fuite spécifiée ;
iii) l'ajout du nombre fixe de noeuds virtuels à tous les noeuds réels et la formation de liaisons virtuelles en connectant les noeuds virtuels avec leurs voisins ;
iv) aussi longtemps que la fuite actuelle excède la fuite autorisée, la réduction de la fuite actuelle au moyen des étapes suivantes v) à vii) :
v) le choix du noeud dont la densité de flux est la plus élevée parmi tous les noeuds et l'extraction de ses noeuds virtuels existants pour vérifier si la densité de flux d'au moins l'un des noeuds virtuels est ou non en deçà de la fuite autorisée ; et si c'est le cas, le choix dudit noeud pour diminuer la fuite actuelle ; sinon, la création d'un noeud virtuel additionnel ;

vi) soit à l'aide du noeud existant, soit à l'aide du noeud virtuel additionnel, l'égalisation de la densité de flux du noeud actuel en créant des noeuds virtuels dans tous ses noeuds voisins et en créant une liaison virtuelle arrivante afin de séparer de façon égale la densité de flux entre la liaison virtuelle et la liaison arrivante réelle ;

vii) la répétition des étapes v) et vi) d'une façon récursive jusqu'à ce que des noeuds virtuels soient créés pour tous les noeuds précédents et dans la direction opposée pour tous les noeuds suivants afférents et le calcul à nouveau de la fuite actuelle.

7. Système d'obfuscation de topologie de réseau, comprenant les composants suivants :

- un analyseur de topologie (110) configuré pour obtenir une topologie logique correspondant à une vue adverse de la topologie de réseau et une distribution des flux de traçage, à partir d'une entrée (100) sur l'analyseur de topologie (110) qui est constituée par une topologie physique fournie par un opérateur de réseau (10), un comportement de transmission de la topologie de réseau et des flux de traçage adverses ;

- un obfuscateur de topologie (120) configuré pour recevoir la topologie logique et la distribution des flux de traçage obtenues par l'analyseur de topologie (110), et pour générer une topologie virtuelle qui comprend un certain nombre de noeuds virtuels et de liaisons virtuelles, les noeuds virtuels selon le certain nombre étant créés par l'obfuscateur de topologie (120) pour égaliser la distribution des flux de traçage et leur nombre étant déterminé par une fuite de topologie qui est calculée en tant que différence entre une densité de flux du noeud le plus populaire et une densité de flux du noeud le moins populaire, dans lequel le noeud le plus populaire est le noeud qui reçoit le plus de flux de traçage et le noeud le moins populaire est le noeud qui reçoit le moins de flux de traçage dans le réseau ;

- un moyen de déploiement de topologie (130) configuré pour déployer la topologie virtuelle générée, à l'intérieur des noeuds réels et des liaisons réelles du réseau en utilisant une mise en réseau définie par logiciel, SDN, et pour surveiller en continu tous les flux de traçage qui arrivent dans le réseau ;

- dans lequel, seulement si, après la réception d'un paquet de traçage qui a expiré dans l'un quelconque des flux de traçage arrivants, l'obfuscateur de topologie (120) compare la fuite de topologie avec une valeur de seuil qui est définie par l'opérateur de réseau (10) et, si la fuite de topologie excède la valeur de seuil, le nombre de noeuds virtuels et de liaisons virtuelles qui sont créés par l'obfuscateur de topologie (120) est réglé et ce nombre réglé est communiqué au moyen de déploiement de topologie (130) pour équilibrer les flux de traçage arrivants entre les noeuds réels et le nombre réglé de noeuds virtuels qui sont créés par l'obfuscateur de topologie (120).

8. Système selon la revendication 7, dans lequel l'obfuscateur de topologie (120) crée un nombre de noeuds virtuels qui satisfait le fait que la fuite de topologie calculée est égale à la valeur de seuil qui est définie en tant que seuil d'obfuscation (□) qui représente un pourcentage de réduction de fuite de topologie émanant de l'opérateur de réseau (10), ou est en-deçà de cette même valeur de seuil, l'opérateur de réseau (10) fournissant le comportement de transmission de la topologie de réseau et les flux de traçage adverses.

9. Système selon la revendication 7, dans lequel les flux de traçage adverses sont obtenus en ligne lorsque des flux de traçage arrivent sur le réseau, et l'obfuscateur de topologie (120) crée un nombre de noeuds virtuels qui satisfait le fait que la fuite de topologie calculée est égale à la valeur de seuil qui est définie en tant que limite tolérée de flux de traçage qui représente une différence maximum en termes de nombre de flux de traçage entre les noeuds d'une quelconque paire de noeuds qui est tolérée dans le réseau, ou est en-deçà de cette même valeur de seuil.

10. Système selon l'une quelconque des revendications 7 à 9, dans lequel le moyen de déploiement de topologie (130) est configuré pour déployer la topologie virtuelle en exécutant les étapes suivantes :

- la matérialisation des noeuds virtuels en générant une règle de flux pour demander à des routeurs compatibles SDN qui sont commandés par un contrôleur SDN (500) de répondre à des paquets de traçage, dans lequel la réponse aux paquets de traçage comprend :

lorsqu'un routeur compatible SDN détecte un paquet de traçage qui a expiré, le routeur envoie le paquet sur le contrôleur SDN (500) et le contrôleur SDN (500) calcule la fuite de topologie actuelle, vérifie si la fuite de topologie actuelle excède la valeur de seuil et sélectionne une adresse IP pour répondre au paquet de traçage, l'adresse IP étant sélectionnée parmi l'adresse IP réelle du noeud réel correspondant au routeur et l'adresse IP virtuelle de l'un quelconque des noeuds virtuels appartenant au noeud réel ; et

- l'attribution d'adresses IP aux noeuds virtuels soit en allouant des adresses IP choisies de façon aléatoire à l'intérieur du même sous-réseau des noeuds réels auquel les noeuds virtuels appartiennent, soit en extrayant une liste d'adresses IP attribuées en provenance des services de découverte de topologie du contrôleur SDN (500).

11. Système selon l'une quelconque des revendications 7 à 10, dans lequel l'analyseur de topologie (110) est configuré pour obtenir la topologie logique en exécutant les étapes suivantes d'un algorithme basé sur graphe :

i) le prélèvement d'un flux de traçage adverses, lequel spécifie le nombre de flux de traçage qui sont envoyés depuis une source jusqu'à une destination ;
ii) le calcul d'une voie physique qui contient tous les noeuds de la topologie physique le long de la voie la plus courte depuis la source jusqu'à la destination ;
iii) la visite de chaque noeud physique le long de la voie physique par un flux de traçage ;
iv) pour chaque noeud physique visité, l'obtention d'une réponse de traçage avec l'adresse IP de l'interface d'entrée du routeur qui identifie un noeud actuel logique ;
v) la création d'une liaison logique depuis le dernier noeud visité jusqu'au noeud actuel ;
vi) l'ajout de la liaison logique et du noeud logique dans la topologie logique et du nombre de flux de traçage à la densité de flux de la liaison logique et du noeud logique ;
vii) la répétition des étapes i) à vi) pour tous les noeuds physiques le long de la voie physique pour tous les flux de traçage adverses.

12. Système selon l'une quelconque des revendications 7 à 11, dans lequel l'obfuscateur de topologie (120) est configuré pour générer la topologie virtuelle en exécutant les étapes suivantes d'un algorithme d'obfuscation hors ligne :

i) la considération, en tant qu'entrée, de la topologie logique qui est obtenue par l'analyseur de topologie (110), d'une réduction de fuite spécifiée et d'un nombre fixe de noeuds virtuels par noeud réel ;
ii) le calcul d'une fuite autorisée sur la base d'une fuite actuelle et de la réduction de fuite spécifiée ;
iii) l'ajout du nombre fixe de noeuds virtuels à tous les noeuds réels et la formation de liaisons virtuelles en connectant les noeuds virtuels avec leurs voisins ;
iv) aussi longtemps que la fuite actuelle excède la fuite autorisée, la réduction de la fuite actuelle au moyen des étapes suivantes v) à vii) :
v) le choix du noeud dont la densité de flux est la plus élevée parmi tous les noeuds et l'extraction de ses noeuds virtuels existants pour vérifier si la densité de flux d'au moins l'un des noeuds virtuels est ou non en deçà de la fuite autorisée ; et si c'est le cas, le choix dudit noeud pour diminuer la fuite actuelle ; sinon, la création d'un noeud virtuel additionnel ;
vi) soit à l'aide du noeud existant, soit à l'aide du noeud virtuel additionnel, l'égalisation de la densité de flux du noeud actuel en créant des noeuds virtuels dans tous ses noeuds voisins et en créant une liaison virtuelle arrivante afin de séparer de façon égale la densité de flux entre la liaison virtuelle et la liaison arrivante réelle ;
vii) la répétition des étapes v) et vi) d'une façon récursive jusqu'à ce que des noeuds virtuels soient créés pour tous les noeuds précédents et dans la direction opposée pour tous les noeuds suivants afférents et le calcul à nouveau de la fuite actuelle.

FIG. 1

FIG. 2

**FIG. 3**

Always appear

Neighbor virtual nodes

FIG. 4

**FIG. 5**

FIG. 6A

FIG. 6B

**FIG. 6C**

**FIG. 7A**

**FIG. 7B**

**FIG. 7C**

FIG. 8A

FIG. 8B

FIG. 9

FIG. 10

**FIG. 11**

**FIG. 12**

**FIG. 13**

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEIER et al.** NetHide: Secure and Practical Network Topology Obfuscation. *Proceedings of the USENIX Security Symposium,* 2018
- **TRASSARE et al.** A technique for Network Topology Deception. *Proceedings of IEEE Military Communications Conference,* 2013
- **WANG et al.** LinkBait: Active Link Obfuscation to Thwart Link-Flooding Attacks. *arXiv Preprint,* 2017
- **KIM JINWOO.** BottleNet: Hiding Network Bottlenecks Using SDN-Based Topology Deception. *IEEE TRANSACTIONS ON INFORMATION FORENSICS AND SECURITY,* 26 April 2021, vol. 16, 3138-3153